# EUROPÄISCHE PATENTANMELDUNG

(11) **EP 4 851 454 A1**
(43) Veröffentlichungstag der Anmeldung: **09.12.2026**
(21) Anmeldenummer: 25180755.8
(22) Anmeldetag: 04.06.2025
(51) Int. Cl.: F03D 1/06

(54) **ROTORBLATT MIT AERODYNAMISCH WIRKSAMEM VORFLÜGEL, WINDENERGIEANLAGE UND VERFAHREN**

(71) Anmelder: Wobben Properties GmbH, 26607 Aurich (DE)
(72) Erfinder: Stemberg, Jochen, 26607 Aurich (DE); Arnold, Matthias, 26603 Aurich (DE)
(74) Vertreter: Eisenführ Speiser

(57) **Zusammenfassung**

Die Erfindung betrifft ein Rotorblatt für eine Windenergieanlage, eine Windenergieanlage sowie Verfahren zum Nachrüsten und Bereitstellen eines Rotorblatts und Verwenden eines Vorflügels. Das Rotorblatt für eine Windenergieanlage umfasst einen Hauptflügel, der sich von einer Rotorblattwurzel bis zu einer Rotorblattspitze in einer Rotorblattlängsrichtung mit einer Rotorblattlänge erstreckt, eine sich zwischen einer Vorderkante und einer Hinterkante des Hauptflügels einstellende Profiltiefe des Hauptflügels und eine sich von der Vorderkante bis zur Hinterkante des Hauptflügels erstreckende Saugseite und Druckseite, aufweist und einen Vorflügel, der sich im Wesentlichen in der Rotorblattlängsrichtung erstreckt und eine sich zwischen einer Vorderkante und einer Hinterkante des Vorflügels einstellende Profiltiefe des Vorderflügels und eine sich von der Vorderkante bis zur Hinterkante des Vorflügels erstreckende aerodynamisch wirksame Fläche zur Strömungsbeeinflussung umfassend eine Saugseite und eine Druckseite aufweist, wobei der Vorflügel am Hauptflügel anbringbar ist, dadurch gekennzeichnet, dass der Vorflügel eine Geometrie aufweist, die zur Erzeugung einer inhomogenen Zirkulationsverteilung ausgebildet ist.

## Beschreibung

Die Erfindung betrifft ein Rotorblatt, eine Windenergieanlage, sowie ein Verfahren zum Nachrüsten eines Rotorblatts, ein Verfahren zum Bereitstellen eines Rotorblatts und ein Verfahren zum Verwenden eines Vorflügels.

Windenergieanlagen sind bekannt. Sie stellen eine der vielversprechendsten Quellen erneuerbarer Energie dar. Per aerodynamischer Rotorblätter wird dabei Energie aus dem Wind entnommen und in Auftrieb, Rotation und schließlich durch einen Generator elektrische Energie umgewandelt.

Die aerodynamischen Rotorblätter stellen dabei Schlüsselelemente der Windenergieanlagen dar, da die gesamte Steuerung sowie die Leistung der Windenergieanlage von ihnen abhängen. Um die Leistung von Windenergieanlagen weiter zu optimieren werden in den letzten Jahren beispielsweise immer längere Rotorblätter entworfen. Auch die Aerodynamik der Rotorblätter wurde durch Zusatzelemente wie beispielsweise Vortex-Generatoren, Klappen oder Hinterkantenelemente wie Serrations, verbessert.

Vor diesem Hintergrund lag der Erfindung die Aufgabe zugrunde, ein Rotorblatt mit erhöhtem Auftrieb und verbesserter Aerodynamik bereitzustellen, das zumindest eine Alternative zu oben genannten bekannten Ansätzen zur Optimierung von Rotorblättern darstellt.

Gemäß einem ersten Aspekt der Erfindung wird ein Rotorblatt für eine Windenergieanlage bereitgestellt, umfassend einen Hauptflügel, der sich von einer Rotorblattwurzel bis zu einer Rotorblattspitze in einer Rotorblattlängsrichtung mit einer Rotorblattlänge erstreckt, eine sich zwischen einer Vorderkante und einer Hinterkante des Hauptflügels einstellende Profiltiefe des Hauptflügels und eine sich von der Vorderkante bis zur Hinterkante des Hauptflügels erstreckende Saugseite und Druckseite, zwischen denen sich ein aerodynamisches Profil ausbildet, aufweist und einen Vorflügel, der sich im Wesentlichen in der Rotorblattlängsrichtung erstreckt und eine sich zwischen einer Vorderkante und einer Hinterkante des Vorflügels einstellende Profiltiefe des Vorderflügels und eine sich von der Vorderkante bis zur Hinterkante des Vorflügels erstreckende aerodynamisch wirksame Fläche zur Strömungsbeeinflussung umfassend eine Saugseite und eine Druckseite aufweist, wobei der Vorflügel am Hauptflügel anbringbar ist, dadurch gekennzeichnet, dass der Vorflügel eine Geometrie aufweist, die zur Erzeugung einer inhomogenen Zirkulationsverteilung ausgebildet ist.

Der Vorflügel erstreckt sich dabei über eine Vorflügellänge im Wesentlichen in Rotorblattlängsrichtung. Im Wesentlichen bedeutet dabei, dass geringe Abweichungen von der Rotorblattlängsrichtung, beispielsweise durch die Form des Vorflügels, auftreten können. Beispielsweise kann eine lokale Krümmung des Vorflügels von einer lokalen Krümmung des Hauptflügels abweichen. Der Vorflügel ist bevorzugt im Wesentlichen entsprechend dem Verlauf der Vorderkante des Hauptflügels ausgestaltet. Im Wesentlichen bedeutet dabei, dass ein direkter, kleinster Abstand zwischen Vorderkante des Vorflügels und Vorderkante des Hauptflügels um maximal 20% variiert. Die Vorflügellänge ist insbesondere geringer als die Rotorblattlänge. Umfasst der Hauptflügel ein oder mehrere Trennstellen, die verschiedene Hauptflügelabschnitte verbinden, entspricht die Vorflügellänge bevorzugt der Länge eines Hauptflügelabschnitts oder zwei oder mehrerer verbundener Hauptflügelabschnitte. Der Vorflügel ist in einem angebrachten Zustand vorzugsweise in einem inneren Rotorbereich, beispielsweise von der Rotorblattwurzel bis etwa 50% der Rotorblattlänge, aerodynamisch wirksam.

Bekannt sind Flügel- oder Rotorblattsektionen mit Vortexgeneratoren oder Vorflügeln, oder einer Kombination aus Vorflügel und Vortexgeneratoren. Der Nachteil hierbei ist, dass die Wirkung des Vorflügels und die Wirkung der Vortexgeneratoren separat voneinander erreicht werden müssen. Im Falle der Verwendung nur eines der beiden genannten Anbauteile kann nicht das volle Auftriebspotential ausgeschöpft werden. Im Falle der Verwendung beider Anbauteile (Vorflügel plus Vortexgeneratoren) besteht der Nachteil darin, dass jedenfalls zwei Anbauteile benötigt werden und die auftriebssteigernde Wirkung durch einen erhöhten Widerstand durch die Vortexgeneratoren erkauft wird. Andersherum können Vortexgeneratoren deutlich mehr Auftrieb erzeugen, wenn sie auch eine auftriebserzeugende Fläche, die annähernd parallel zur Hauptflügelfläche verläuft, enthalten.

Ein erfindungsgemäßes Rotorblatt erzeugt durch den Vorflügel auch die Wirkung von Vortexgeneratoren, ohne dass separate widerstandserzeugende Wirbelelemente benötigt werden. Alternativ kann mit besonderen, wirbelerzeugenden Vortexgeneratoren, deren aerodynamische Flächen sich zu einem segmentierten Vorflügel addieren, zusätzlich die Wirkung eines Vorflügels erreicht werden, ohne das ein solches, zusätzliches Bauteil tatsächlich montiert wird.

Ein besonderes Verbesserungspotential des Auftriebs besitzt der Vorflügel bei Rotorblättern mit besonders dickem Hauptflügel, mit einer relativen Dicke, die sich aus Profildicke zu Profiltiefe ergibt, von etwa 25% oder mehr. Zusätzlich ermöglicht ein erfindungsgemäßes Rotorblatt mit Vorflügel eine Auftriebssteigerung bei gleichzeitig geringen Widerstandssteigerungen.

Der Vorflügel ist insbesondere an mehreren Stellen an dem Hauptflügel anbringbar. Der Vorflügel ist dabei derart an dem Hauptflügel anbringbar ausgestaltet, dass der Vorflügel an dem Hauptflügel in einem angebrachten Zustand so befestigt ist, dass im Betrieb des Rotorblatt auftretende Kräfte, auch in Extremsituationen, die Befestigung nicht lösen. Beispielsweise ist der Vorflügel an mehreren Stellen mit dem Hauptflügel verschweißt, verschraubt, verklebt, laminiert, verbolzt und/oder vernietet. Die Befestigung ist bevorzugt über Stege, Distanzstücke, vorzugsweise justierbare Halter oder andere Beabstandungselemente zum Hauptflügel realisiert. Alternativ ist auch eine integrale Fertigung des Vorflügels an dem Hauptflügel umfasst, beispielsweise derart, dass Hauptflügel und Vorflügel in einem Laminiervorgang gefertigt werden.

Die Profiltiefe des Vorflügels ist geringer als die Profiltiefe des Hauptflügels. Die Profiltiefe des Vorflügels erstreckt sich insbesondere im Wesentlichen in Richtung der Profiltiefe des Hauptflügels. Der Vorflügel ist insbesondere derart an dem Hauptflügel anbringbar, dass in Richtung der Profiltiefe des Hauptflügels, der Abstand der Position der Vorderkante des Vorflügels von der Vorderkante des Hauptflügels einen negativen Wert, null oder bevorzugt einen positiven Wert aufweist. Ein negativer Wert des Abstands der Position der Vorderkante des Vorflügels von der Vorderkante des Hauptflügels bedeutet dabei, dass die Vorderkante des Vorflügels in Richtung der Profiltiefe des Hauptflügels vor der Vorderkante des Hauptflügels positioniert ist.

Ein signifikanter Anteil des von dem Rotorblatt im Betrieb generierten Auftriebs wird hierbei vom Vorflügel erzeugt. Beispielsweise zwischen 1 % und 90 %, insbesondere 10 % bis 75 %, bevorzugt 25 % bis 75 %. Trotz seiner vorzugsweise geringen Größe gegenüber dem Hauptflügel erzeugt der Vorflügel insbesondere mehr Auftrieb in einem jeweiligen Rotorblattabschnitt, in dem der Vorflügel installiert ist, als der Hauptflügel. Gesehen über die gesamte Rotorblattlänge generiert der Hauptflügel üblicherweise mehr Auftrieb als der Vorflügel. Es existieren jedoch ebenfalls Ausführungsbeispiele, in denen der Vorflügel auch gesehen über die gesamte Rotorblattlänge des Hauptflügels mehr Auftrieb erzeugt als der Hauptflügel. Dadurch, dass der Vorflügel bevorzugt im Bereich der größten Strömungsgeschwindigkeit um den Hauptflügel montiert wird, hat dieser ein deutlich größeres Auftriebspotential als der gleiche Flügel in freier Strömung . Der Vorflügel, auch Slat genannt, ist dabei derart ausgestaltet, vorteilhafte Luftverwirbelungen, insbesondere auf der Saugseite des Hauptflügels zu generieren, was in einem gesteigerten Auftrieb des Hauptflügels resultiert. Es wurde erkannt, dass durch den Vorflügel induzierte inhomogene Zirkulationsverteilungen insbesondere auf der Saugseite des Hauptflügels die Aerodynamik und den Auftrieb des Hauptflügels verbessern. Insbesondere in spannweitiger Richtung wird dabei durch den Vorflügel eine inhomogene Druckverteilung aufbaut, die dazu führt, dass sich an der Hinterkante des Vorflügels in regelmäßigen Abständen kleine Wirbelpaare bilden, die dann mit der Strömung entlang der Oberfläche des Hauptflügels abwandern. Durch diese Wirbel kann die Grenzschicht am Hauptflügel ähnlich wie bei der Verwendung von Vortex-generatoren positiv beeinflusst werden. Durch die entstehenden zirkulierenden Wirbel findet ein Impulstransfer zwischen der energiearmen, reibungsbehafteten oberflächennahen Strömung und der oberflächenfernen, energiereichen Strömung statt. Auf diese Weise lassen sich die Vorteile eines Vorflügels (Reduktion der Saugspitze am Hauptprofil und damit Entschärfung des negativen Druckgradienten der Strömung am Hauptprofil) mit denen eines Vortexgenerators (Durchmischung der Grenzschicht mit frischer, energiereicher Strömung) verbinden. Bei Verwendung nur eines Bauteils, nämlich des Vorflügels, sind zeitgleich also auch die positiven Effekte eines Vortexgenerators erreichbar, ohne dass solch ein zusätzliches Bauteil verwendet wird.

Zum Erreichen dieser spannweitigen Variation der Druckverteilung können verschiedene Geometrien zum Einsatz kommen. Hierbei sind insbesondere Änderungen in der Wölbung und des Einbauwinkels des Vorflügels, sowie Änderungen in der Profiltiefe zu nennen. Diese Änderungen sind beispielsweise entweder kontinuierlich, mit Eckpunkten oder stufenförmig ausgeführt. Bevorzugt ist der Einsatz von dreieckigen oder rechteckigen Trailing Edge Serrations (TES) an der Hinterkante des Vorflügels oder eine Änderung der Profiltiefe mit Eckpunkten. Die Änderung der Profiltiefe nimmt in einer Ausführungsform hierbei im Extremwert als Reduktion um 100% an, wodurch eine unterbrochene Vorflügel-Geometrie entsteht. Zusätzlich ist insbesondere die spannweitige Variation der Druckverteilung beispielsweise durch eine tangentiale Variation der Position des Vorflügels oder durch eine Variation des Oberflächenabstandes erreicht. Insbesondere sind auch Kombinationen dieser geometrischen Variationen möglich.

Die Ausführungsform mit einer Profiltiefenreduktion um bis zu 100% kann auch andersherum als Ausführungen von Vortexgeneratoren abgeleitet werden, die zeitgleich die Funktion eines Vorflügels übernehmen. Solche Vortexgeneratoren haben insbesondere eine jeweils nicht orthogonal zur Hauptflügeloberfläche verlaufende Flügelfläche, welche nicht nur oberflächenparallele Wirbel, sondern gleichzeitig auch Auftrieb erzeugt und die Druckverteilung um den Hauptflügel positiv beeinflusst. Der Übergang von einem segmentierten Vorflügel (d.h. ein solcher, der abschnittsweise 100% Profiltiefenreduktion aufweist) zu Vortexgeneratoren mit einer nicht orthogonal zur Flügelfläche verlaufenden, auftriebserzeugenden Fläche ist hierbei fließend. So umfasst ein segmentierter Vorflügel insbesondere mehrere, bevorzugt dicht nebeneinander platzierte Vortexgeneratoren mit einer auftriebserzeugenden Fläche. Die auftriebserzeugenden Flächen der mehreren Vortexgeneratoren bilden somit eine durch die Abstände zwischen den Flächen der Vortexgeneratoren unterbrochene, unstetige aerodynamisch wirksame Fläche eines Vorflügels.

Es bestehen demnach vielfältige Möglichkeiten eine inhomogene Zirkulationsverteilung auf der Oberfläche eines Hauptflügels durch einen Vorflügel zu erzeugen. Auch wenn sich verschiedenste dieser Möglichkeiten in der Stärke ihres resultierenden Effekts unterscheiden, wird bei jeder dieser Möglichkeiten ein positiver Effekt durch die inhomogene Zirkulationsverteilung erzielt. Weitere dieser Möglichkeiten sind in den folgenden Ausgestaltungen des ersten Aspekts beschrieben. Die Erfindung ist jedoch nicht auf diese Ausgestaltungen beschränkt, sondern umfasst alle Rotorblätter mit Vorflügeln zur Erzeugung inhomogener Zirkulationsverteilungen.

Gemäß einer vorteilhaften Ausgestaltung des ersten Aspekts der Erfindung weist die Geometrie des Vorflügels eine Kontur der Hinterkante auf, die zur Erzeugung einer inhomogenen Auftriebsverteilung in dem Bereich des Rotorblattes, auf den der Vorflügel aerodynamische Auswirkungen hat, insbesondere durch Erzeugung von Verwirbelungen und Energieeintrag in die Grenzschicht, ausgebildet ist.

Die Hinterkante des Vorflügels ist dafür insbesondere derart modifiziert, dass sich am Vorflügel eine inhomogene Auftriebsverteilung ergibt, die zu gleichmäßiger Wirbelbildung im Bereich der Hinterkante führt. Diese Wirbel pflanzen sich bei korrekter Ausführung auf die Profiloberfläche des Hauptflügels, an dem der Vorflügel montiert ist fort, und reichern die energiearme Grenzschicht mit Luft aus energiereicheren Bereichen außerhalb der Grenzschicht an.

Dies steigert das Auftriebspotential einer Flügelsektion mit Vorflügel durch leichte Modifikationen der Hinterkantengeometrie des Vorflügels signifikant.

Die folgenden Beispiele stellen beispielhafte Ausführungsformen der vorliegenden Ausgestaltung des ersten Aspekts dar: Vorflügel mit wellenartiger oder stufenartiger Verteilung der Hinterkantenwinkel, Vorflügel mit wellenartiger oder stufenartiger Verteilung der Profiltiefe entlang des Vorflügels, Segmentierter Vorflügel, Insgesamt Wellen- oder stufenartiger Vorflügel, Vorflügel mit wellen- oder stufenartiger Abstandsvariation zum Hauptflügel, Vortexgeneratoren mit symmetrischem Tragflügel (counter-rotating), Vortexgenerator mit identischem, asymmetrischen (einseitigen) Tragflügel gleichsinnig aufgebracht (co-rotating), Vortexgenerator mit gespiegelt angebrachtem asymmetrischen (einseitigen) Tragflügel (counter-rotating). Mehrere der einzelnen Vortexgeneratoren beschreiben dabei nebeneinander angebracht zum Beispiels einen segmentierten Vorflügel.

Gemäß einer weiteren vorteilhaften Ausgestaltung des ersten Aspekts der Erfindung ist der Vorflügel als Slat zur Verlängerung der Profiltiefe des Hauptflügels an der Vorderkante des Hauptflügels ausgebildet, und stellt sich die Profiltiefe des Hauptflügels zwischen der Vorderkante des Vorflügels und der Hinterkante des Hauptflügels ein.

In dieser Ausgestaltung generiert der Vorflügel als Slat zusätzlichen Auftrieb, da er die Profiltiefe des Hauptflügels verlängert und somit eine zusätzliche Anströmfläche darstellt. Insbesondere überlappt der Vorflügel dabei die Vorderkante des Hauptflügels derart, dass die Hinterkante des Vorflügels auf einer der Druck- oder Saugseite des Hauptflügels angeordnet ist. Somit generiert der Vorflügel Verwirbelungen auf der Seite der Druck- oder Saugseite, auf der die Hinterkante des Vorflügels angeordnet ist, die in einer besseren Aerodynamik des Rotorblatts resultieren. Zusätzlich verbessert der Vorflügel in dieser Ausgestaltung den Auftrieb des Rotorblatts.

Gemäß einer weiteren vorteilhaften Ausgestaltung des ersten Aspekts der Erfindung erstreckt sich der Vorflügel über eine Länge von mindestens 2%, maximal 50% der Rotorblattlänge, vorzugsweise 10% bis 30% der Rotorblattlänge. Gerade in Bereichen nahe der Rotorblattspitze ist es besonders wünschenswert zusätzliche Widerstände zu vermeiden.

Ein Vorflügel mit einer Länge, die bis in einen Bereich nahe der Rotorblattspitze reicht, führt dort potentiell zu negativen Effekten, wie erhöhtem Widerstand, was wiederum die Leistung des Rotorblatts mindert. Der Auftrieb kann auch am Außenblatt durchaus gesteigert werden. Allerdings ist der zusätzliche Widerstand in Bereichen nahe der Rotorblattspitze deutlich schädlicher als im Blattinnenbereich. Des Weiteren wirkt sich das Gewicht eines sehr langen Vorflügels, beispielsweise mit einer Länge von 100% der Rotorblattlänge negativ auf die Lasten und Stabilität des Rotorblatts aus. Es wurde daher erkannt, dass die Vorteile eines Vorflügels am besten bei Längen des Vorflügels zwischen 2% der Rotorblattlänge und maximal 50% der Rotorblattlänge zur Geltung kommen.

Gemäß einer weiteren vorteilhaften Ausgestaltung des ersten Aspekts der Erfindung gibt eine relative Rotorblattlänge das Verhältnis von dem Abstand einer Position auf dem Rotorblatt zur Rotorblattwurzel zur Rotorblattlänge an, und erstreckt sich der Vorflügel maximal von einer ersten relativen Rotorblattlänge von 0% bis 15% zu einer zweiten relativen Rotorblattlänge von 5% bis 50%, wobei die zweite relative Rotorblattlänge größer ist als die erste Rotorblattlänge.

In dieser Ausgestaltung erstreckt sich also ein Vorflügel mit einer Länge von 50% der Rotorblattlänge von einer relativen Rotorblattlänge von 0% bis zur relativen Rotorblattlänge von 50%. Ein Vorflügel mit einer Länge von 35% der Rotorblattlänge kann sich hingegen beispielsweise von einer relativen Rotorblattlänge von 0% bis zur relativen Rotorblattlänge von 35% oder aber, neben vielen anderen Möglichkeiten, auch von einer relativen Rotorblattlänge von 15% bis zur relativen Rotorblattlänge von 50% erstrecken.

Dieser Ausgestaltung liegt die Erkenntnis zugrunde, dass gerade in dicken Abschnitten des Rotorblatts, die für gewöhnlich nahe der Rotorblattwurzel angeordnet sind, ein erfindungsgemäßer Vorflügel den Auftrieb eines Rotorblatts verbessern kann. In blattspitzennahen Rotorblattbereichen überwiegen hingegen potentielle negative Effekte eines Vorflügels, wie zusätzliches Gewicht. Auch eine geringe Widerstandssteigerung fällt in einem Bereich nahe der Rotorblattspitze mehr ins Gewicht. Daher wurde erkannt, dass ein erfindungsgemäßer Vorflügel angeordnet in einem Rotorblattbereich von der Rotorblattwurzel bis etwa zur Hälfte der Rotorblattlänge sich besonders vorteilhaft auf das Rotorblatt auswirkt.

Gemäß einer bevorzugten Variante einer vorteilhaften Ausgestaltung des ersten Aspekts der Erfindung, ist die Kontur der Hinterkante des Vorflügels, insbesondere senkrecht zur Profiltiefe des Vorflügels, wellig oder gleichmäßig gezackt oder ungleichmäßig gezackt oder gleichmäßig gestuft oder ungleichmäßig gestuft ausgestaltet. Eine solche Ausgestaltung der Hinterkante des Vorflügels generiert eine inhomogene Zirkulationsverteilung auf der Oberfläche des Hauptflügels.

Gleichmäßig gezackt und gleichmäßig gestuft bedeutet dabei, dass die Zacken beziehungsweise Stufen einer gleichmäßigen Ordnung folgen und sich mit einer konstanten Periode, beziehungsweise Wiederholung mit einer konstanten Größe oder einem konstanten Größenverhältnis mehrerer Zacken oder Stufen zueinander oder einer konstanten Größenänderung über den Verlauf der Hinterkante des Vorflügels erstrecken.

Ungleichmäßig gezackt und ungleichmäßig gestuft meint hingegen, dass kein durchgehendes sich wiederholendes Muster in dem Verlauf der Zacken und Stufen über die Hinterkante des Vorflügels erkennbar ist. Insbesondere weist die Hinterkante des Vorflügels Abschnitte auf, in denen die Hinterkante gleichmäßig gezackt und/oder gleichmäßig gestuft ist und Bereiche, in denen die Hinterkante ungleichmäßig gezackt und/oder ungleichmäßig gestuft ist. Auch Kombinationen von gleichmäßigen Zacken und ungleichmäßigen Stufen oder gleichmäßigen Stufen und ungleichmäßigen Zacken sind denkbar.

Insbesondere ist die Hinterkante des Vorflügels wellig und/oder gleichmäßig gezackt und/oder gleichmäßig gestuft oder ungleichmäßig gestuft ausgestaltet, oder wellig und/oder ungleichmäßig gezackt und/oder gleichmäßig gestuft oder ungleichmäßig gestuft ausgestaltet.

Insbesondere beschreibt die Kontur der Hinterkante des Vorflügels in dieser Variante die Kontur der Hinterkante des Vorflügels im Wesentlichen senkrecht zur Profiltiefe des Vorflügels und bevorzugt im Wesentlichen senkrecht zur Richtung in der sich die Länge des Vorflügels erstreckt, besonders bevorzugt im Wesentlichen senkrecht zur Rotorblattlängsrichtung. Eine Zacke, Stufe oder Welle in dieser Kontur verändert also einen Abstand der Positionen auf der Kontur von der Oberfläche des Hauptflügels.

Der gezackte Verlauf der Kontur ist nicht beschränkt auf ein einfaches Zick-Zack Muster, sondern umfasst auch komplexere Zackenstrukturen.

Gemäß einer weiteren bevorzugten Variante einer vorteilhaften Ausgestaltung des ersten Aspekts der Erfindung, ist die Kontur der Hinterkante des Vorflügels, insbesondere senkrecht zur Profiltiefe des Vorflügels, wellig ausgestaltet, nämlich mit einer Amplitude der Welle mit einem Wert zwischen 2% der Profiltiefe des Vorflügels und 20% der Profiltiefe des Vorflügels, und einer Periode der Welle mit einem Wert zwischen 1%, insbesondere 5%, der Profiltiefe des Vorflügels und 500%, insbesondere 200%, vorzugsweise zwischen 5% und 200%, der Profiltiefe des Vorflügels. Diese Variante baut also auf der obigen Variante auf und beschreibt die wellige Ausgestaltung der Kontur der Hinterkante des Vorflügels weiter.

Die wellig ausgestaltete Kontur der Hinterkante des Vorflügels ist insbesondere gemäß einer Sinusfunktion mit Amplitude und Periode ausgestaltet. Alternativ sind ebenso höherharmonische Funktionen mit Amplitude und Periode denkbar.

Der prozentuale Wert der Periode der Welle ist dabei insbesondere von der Profiltiefe des Vorflügels abhängig. Bei einem schmalen Vorflügel sind beispielsweise große Werte der Periode bis zu 500% der Profiltiefe des Vorflügels von Vorteil.

Bevorzugt ist die Profiltiefe des Vorflügels abhängig von der lokalen Profiltiefe des Hauptflügels und die Periode der Welle wiederum abhängig von einem Verhältnis daraus. Wenn beispielsweise der Vorflügel extrem schmal ist, angenommen nur 2% der lokalen Profiltiefe des Hauptflügels, sind Werte der Periode von deutlich mehr als 200% der Profiltiefe des Vorflügels vorteilhaft, beispielsweise 500%.

Wenn der Vorflügel extrem tief ausgeführt ist, zum Beispiel eine Profiltiefe von 40% der lokalen Profiltiefe des Hauptflügels aufweist, ist es hingegen vorteilhaft wenn die Periode der Welle einen Wert zwischen 1% der Profiltiefe des Vorflügels und 50% der Profiltiefe des Vorflügels aufweist.

Dies gilt analog für Zackenbreiten und Zackentiefen sowie Stufenbreiten und Stufentiefen.

Gemäß einer weiteren vorteilhaften Ausgestaltung des ersten Aspekts der Erfindung weist der Vorflügel eine wellenartige oder stufenartige oder zackenartige Verteilung der Profiltiefe des Vorflügels in Rotorblattlängsrichtung auf. Diese Verteilung der Profiltiefe ändert den Abstand der Positionen auf der Kontur der Hinterkante von der Vorderkante des Vorflügels und unterscheidet sich somit von obiger Variante. Eine solche Ausgestaltung der Profiltiefe des Vorflügels generiert eine inhomogene Zirkulationsverteilung auf der Oberfläche des Hauptflügels.

Die stufenartige oder zackenartige Verteilung der Profiltiefe des Vorflügels in Rotorblattlängsrichtung ist insbesondere gleichmäßig stufenartig oder ungleichmäßig stufenartig oder gleichmäßig zackenartig oder ungleichmäßig zackenartig.

Gleichmäßig zackenartig und gleichmäßig stufenartig bedeutet dabei, dass die Zacken beziehungsweise Stufen in der Profiltiefe einer gleichmäßigen Ordnung folgen und sich mit einer konstanten Periode, beziehungsweise Wiederholung mit einer konstanten Größe oder einem konstanten Größenverhältnis mehrerer Zacken oder Stufen in der Profiltiefe zueinander oder einer konstanten Größenänderung über den Verlauf des Vorflügels in Rotorblattlängsrichtung erstrecken.

Ungleichmäßig zackenartig und ungleichmäßig stufenartig meint hingegen, dass kein durchgehendes sich wiederholendes Muster in dem Verlauf der Zacken und Stufen in der Profiltiefe über den Verlauf des Vorflügels in Rotorblattlängsrichtung erkennbar ist. Insbesondere weist der Vorflügel Abschnitte auf, in denen die Profiltiefe gleichmäßig zackenartig und/oder gleichmäßig stufenartig ausgebildet ist und Bereiche, in denen die Profiltiefe ungleichmäßig zackenartig und/oder ungleichmäßig stufenartig ausgebildet ist. Auch Kombinationen von gleichmäßigen Zacken und ungleichmäßigen Stufen oder gleichmäßigen Stufen und ungleichmäßigen Zacken in dem Verlauf der Profiltiefe in Rotorblattlängsrichtung sind denkbar.

Der zackenartige oder stufenartige Verlauf der Profiltiefe des Vorflügels in Rotorblattlängsrichtung wird bevorzugt durch Anbauteile an den Vorflügel, wie Serrations oder anderweitige Hinterkantenelemente erreicht. Diese werden beispielsweise an der Hinterkante des Vorflügels angebracht und verändern so den Verlauf der Profiltiefe des Vorflügels in Rotorblattlängsrichtung. Weitere Hinterkantenelemente sind beispielsweise Platten, Bürsten oder Kombinationen aus Serrations, Platten und/oder Bürsten.

Der zackenartige Verlauf der Profiltiefe ist dabei nicht beschränkt auf ein einfaches Zick-Zack Muster, das beispielsweise durch das Anbringen mehrerer dreieckigen Serrations nebeneinander an der Hinterkante des Vorflügels herbeigeführt werden könnte, sondern umfasst auch komplexere Zackenstrukturen, die beispielsweise durch mehreckige Serrations, insbesondere Serrations umfasst vier oder mehr Zacken, die nebeneinander an der Hinterkante des Vorflügels angebracht sind, hervorgerufen werden.

Gemäß einer bevorzugten Variante einer vorteilhaften Ausgestaltung des ersten Aspekts der Erfindung, weist der Vorflügel eine wellenartige Verteilung der Profiltiefe des Vorflügels in Rotorblattlängsrichtung auf, nämlich mit einer Amplitude der Welle mit einem Wert zwischen 2% der Profiltiefe des Vorflügels und 80% , insbesondere 50%, der Profiltiefe des Vorflügels, und einer Periode der Welle mit einem Wert zwischen 5% der der Profiltiefe des Vorflügels und 500%, insbesondere 200%, der Profiltiefe des Vorflügels.

Die Welle in dieser Variation unterscheidet sich von der in der vorherigen Variation dadurch, dass sie durch eine Variation der Profiltiefe erzeugt wird, und nicht, wie in vorheriger Variation durch ein Verdrehen der Profile zu einander oder durch ein stufenartiges abändern der Profilkontur an der Hinterkante. Kurz gesagt: Die Zacken und Wellenkonturen in vorheriger Variation stehen senkrecht zur Profiltiefenrichtung des Vorflügels. Der Zacken und Wellenverlauf in dieser Variation verläuft in Richtung der Profiltiefe des Vorflügels. Die Hinterkante wird in vorheriger Variation insbesondere nur in ihrer Höhe, also dem Abstand zum Hauptflügel versetzt. Hier in dieser Variation wird die Profiltiefe entweder durch skalieren eines vorhandenen Profils oder durch Änderung der Profilgeometrie variiert.

Die wellenartige Verteilung der Profiltiefe des Vorflügels in Rotorblattlängsrichtung ist insbesondere gemäß einer Sinusfunktion mit Amplitude und Periode ausgestaltet. Alternativ sind ebenso höherharmonische Funktionen mit Amplitude und Periode denkbar.

Der prozentuale Wert der Periode der Welle ist dabei insbesondere von der Profiltiefe des Vorflügels abhängig. Bei einem schmalen Vorflügel sind beispielsweise große Werte der Periode bis zu 500% der Profiltiefe des Vorflügels von Vorteil.

Bevorzugt ist die Profiltiefe des Vorflügels abhängig von der lokalen Profiltiefe des Hauptflügels und die Periode der Welle wiederum abhängig von einem Verhältnis daraus. Wenn beispielsweise der Vorflügel extrem schmal ist, angenommen nur 2% der lokalen Profiltiefe des Hauptflügels, sind Werte der Periode von deutlich mehr als 200% der Profiltiefe des Vorflügels vorteilhaft, beispielsweise 500%. Ebenso sind in diesem Fall höhere Werte der Amplitude von bis zu 80% der Profiltiefe vorteilhaft.

Wenn der Vorflügel extrem tief ausgeführt ist, zum Beispiel eine Profiltiefe von 40% der lokalen Profiltiefe des Hauptflügels aufweist, ist es hingegen vorteilhaft wenn die Periode der Welle einen Wert zwischen 2% der Profiltiefe des Vorflügels und 50% der Profiltiefe des Vorflügels aufweist.

Dies gilt analog für Zackenbreiten und Zackentiefen sowie Stufenbreiten und Stufentiefen im Verlauf der Profiltiefe des Vorflügels in Rotorblattlängsrichtung.

Gemäß einer weiteren vorteilhaften Ausgestaltung des ersten Aspekts der Erfindung umfasst die Hinterkante des Vorflügels Serrations. Eine Serration ist insbesondere ein dreieckiges, bevorzugt gleichschenklig dreieckiges Hinterkantenelement, das weiter bevorzugt aus einem Faserverbundwerkstoff, Metall oder Kunststoff gefertigt ist. Bevorzugt werden mehrere Serrations nebeneinander an einer Hinterkante des Vorflügels angebracht, beispielsweise angeklebt oder ein laminiert. Die Größe der Serrations ist dabei insbesondere konstant oder alternativ in Rotorblattlängsrichtung in Richtung Rotorblattspitze abnehmend ausgestaltet.

Serrations sind jedoch nicht beschränkt auf dreieckige Strukturen, sondern können auch als vier- oder mehr-eckige Formen ausgestaltet sein. Serrations optimieren die aerodynamischen Eigenschaften eines Rotorblatts an dem sie angebracht sind, beispielsweise durch einen gesteigerten Auftrieb und reduzierte Akustikemission. Angebracht an einen erfindungsgemäßen Vorflügel wird ebenfalls der Auftrieb des Vorflügels gesteigert oder reduziert. Zusätzlich generieren die Serrations eine inhomogene Zirkulationsverteilung auf der Oberfläche des Hauptflügels, auf der der Vorflügel angeordnet ist. Es wurde erkannt, dass anhand Serrations an der Hinterkante des Vorflügels somit auch der Auftrieb des Hauptflügels, durch Anreicherung der Grenzschicht auf der Oberfläche des Hauptflügels mit energiereicher Strömung, verbessert wird.

Gemäß einer weiteren vorteilhaften Ausgestaltung des ersten Aspekts der Erfindung ist der Vorflügel so an dem Hauptflügel anbringbar, dass sich ein Abstand zwischen der Druckseite des Vorflügels und der Saugseite des Hauptflügels einstellt. Dieser Abstand stellt sich in einem montierten Zustand ein, in dem der Vorflügel an dem Hauptflügel angebracht und insbesondere befestigt ist. Es wurde erkannt, dass durch solch einen Abstand die Luftströmung besonders optimal durch den Vorflügel beeinflusst wird. Die Strömungen zwischen Saugseite des Hauptflügels und Druckseite des Vorflügels tragen vorteilhaft zur Erzeugung von inhomogenen Zirkulationsverteilung auf der Oberfläche des Hauptflügels durch den Vorflügel bei. Somit werden die aerodynamischen Eigenschaften und der Auftrieb des Rotorblatts weiter verbessert. Der Abstand ist dabei insbesondere konstant ausgestaltet. Alternativ variiert der Abstand in Rotorblattlängsrichtung sowie insbesondere in Profiltiefenrichtung des Hauptflügels.

Gemäß einer bevorzugten Variante einer vorteilhaften Ausgestaltung des ersten Aspekts der Erfindung, variiert der Abstand zwischen Vorflügel und Hauptflügel in Rotorblattlängsrichtung abhängig von der Ausgestaltung des Vorflügels, insbesondere wellenartig, stufenartig oder zackenartig. Diese Variation des Abstands trägt zusätzlich zu Erzeugung einer inhomogenen Zirkulationsverteilung auf der Oberfläche des Hauptflügels bei. Somit werden die aerodynamischen Eigenschaften sowie der Auftrieb des Rotorblatts weiter optimiert.

In einer weiteren Variante variiert der Abstand zwischen Vorflügel und Hauptflügel im Wesentlichen in Richtung der Profiltiefe des Vorflügels abhängig von der Ausgestaltung des Vorflügels, insbesondere wellenartig, stufenartig oder zackenartig.

Die wellenartige, stufenartige oder zackenartige Variation des Abstands in diesen Varianten folgt insbesondere einer gleichmäßigen Ordnung in Rotorblattlängsrichtung beziehungsweise in Richtung Profiltiefe des Vorflügels und erstreckt sich bevorzugt mit einer konstanten Periode, beziehungsweise Wiederholung mit einer konstanten Größe oder einem konstanten Größenverhältnis mehrerer Zacken oder Stufen zueinander oder einer konstanten Größenänderung über den Verlauf des Vorflügels in Rotorblattlängsrichtung beziehungsweise in Richtung der Profiltiefe des Vorflügels.

Gemäß einer weiteren vorteilhaften Ausgestaltung des ersten Aspekts der Erfindung weist die Hinterkante des Vorflügels einen Hinterkantenwinkel auf, der sich zwischen der Richtung der Profiltiefe des Vorflügels und einer Richtung, in die sich die Hinterkante abweichend von der Richtung der Profiltiefe des Vorflügels erstreckt, einstellt, und variiert der Hinterkantenwinkel in Rotorblattlängsrichtung, insbesondere wellenartig oder stufenartig.

Anhand des Hinterkantenwinkels ist es möglich unter anderem Auftrieb und Akustikemission des Vorflügels sowie dessen Auswirkungen auf den Auftrieb und die Akustikemission des Hauptflügels zu regulieren. Ein Hinterkantenwinkel in Richtung der Oberfläche des Hauptflügels erhöht beispielsweise den Auftrieb des Vorflügels.

Der Hinterkantenwinkel wird insbesondere durch Anbauteile an die Hinterkante des Vorflügels wie Serrations definiert, deren Ausrichtungsrichtung mit der Richtung der Profiltiefe des Vorflügels den Hinterkantenwinkel aufspannt.

Die wellenartige oder stufenartige Variation des Hinterkantenwinkels in Rotorblattlängsrichtung folgt insbesondere einer gleichmäßigen Ordnung in Rotorblattlängsrichtung und erstreckt sich bevorzugt mit einer konstanten Periode, beziehungsweise Wiederholung mit einer konstanten Größe oder einem konstanten Größenverhältnis mehrerer Stufen zueinander oder einer konstanten Größenänderung über den Verlauf des Vorflügels in Rotorblattlängsrichtung.

Gemäß einer weiteren vorteilhaften Ausgestaltungen ist der Vorflügel in Rotorblattlängsrichtung segmentiert und aus einer Vielzahl von Vortexgeneratoren ausgeführt, wobei die Vortexgeneratoren die aerodynamisch wirksame Fläche aufweisen.

Die Vortexgeneratoren haben üblicherweise eine orthogonal zu der Rotorblattoberfläche ausgeführte Flosse bzw. Flügel. Zusätzlich kann die aerodynamisch wirksame Fläche als zu dieser Flosse abgewinkelte und damit im Wesentlichen parallel zu der Rotorblattoberfläche ausgeführte Fläche ausgebildet sein.

Gemäß einem zweiten Aspekt der Erfindung wird ein Verfahren zum Nachrüsten eines Rotorblattes für eine Windenergieanlage bereitgestellt, umfassend: Anbringen eines Vorflügels umfassend mindestens eine aerodynamisch wirksame Fläche zur Strömungsbeeinflussung umfassend eine Saugseite und eine Druckseite an einem Hauptflügel des Rotorblattes, wobei durch den Vorflügel eine inhomogene Auftriebsverteilung durch Erzeugung von Verwirbelungen in dem Bereich des Rotorblattes erzeugt wird, auf den der Vorflügel aerodynamische Auswirkungen hat.

Das Verfahren zum Nachrüsten eines Rotorblatts impliziert insbesondere, dass das Rotorblatt bereits in Betrieb genommen, oder an einer Windenergieanlage befestigt wurde. Alternativ impliziert das Verfahren, dass der Herstellungsprozess und/oder der Auslegungsprozess des Rotorblatts bereits abgeschlossen ist.

Das Anbringen des Vorflügels umfasst beispielsweise ein schrauben, verschweißen und/oder vernieten des Vorflügels an einem Hauptflügel des Rotorblatts. Insbesondere wird vor dem Anbringen des Vorflügels das gesamte Rotorblatt als Hauptflügel angenommen.

Gemäß einem dritten Aspekt der Erfindung wird ein Verfahren zum Bereitstellen eines Rotorblatts nach einem vorigen Aspekt der Erfindung bereitgestellt, umfassend: Auslegen des Rotorblattes als Rotorblatt mit Haupt- und Vorflügel, Bereitstellen des Vorflügels und des Hauptflügels, Anbringen des Vorflügels an den Hauptflügel des Rotorblattes.

Das Verfahren zum Bereitstellen eines Rotorblatts umfasst insbesondere eine Konstruktion beziehungsweise Herstellung des Rotorblatts.

Der Schritt des Auslegens des Rotorblatts als Rotorblatt mit Haupt- und Vorflügel umfasst insbesondere mehrere komplexe Einzelschritte, wie beispielsweise Aerodynamik- und Lastsimulationen, die bevorzugt mit einem Computer durchgeführt werden. Des Weiteren umfasst das Auslegen des Rotorblatts bevorzugt einen iterativen Optimierungsprozess, der das Rotorblatt, insbesondere das aerodynamische Profil sowie die Struktur des Rotorblatts, hinsichtlich vorbestimmter Anforderungen optimiert.

Der Schritt des Bereitstellens des Vorflügels und des Hauptflügels umfasst insbesondere ein Herstellen des Vorflügels und des Hauptflügels.

Der Schritt des Anbringens des Vorflügels an den Hauptflügel des Rotorblatts umfasst insbesondere ein Befestigen, beispielsweise ein Verschrauben, Kleben, Verschweißen, Laminieren, Verbolzen und/oder Vernieten des Vorflügels an dem Hauptflügel des Rotorblatts.

Die vorteilhaften Effekte und Ausgestaltungen der weiteren Aspekte, insbesondere des ersten Aspekts, der Erfindung treffen ebenso auf ein Rotorblatt, das nach einem erfindungsgemäßen Verfahren bereitgestellt oder nachgerüstet wird, beziehungsweise ein erfindungsgemäßes Verfahren zum Bereitstellen eines Rotorblatts oder Nachrüsten eines Rotorblatts zu.

Gemäß einem vierten Aspekt der Erfindung wird eine Windenergieanlage mit einem oder mehreren Rotorblättern nach einem vorigen Aspekt der Erfindung bereitgestellt.

Die vorteilhaften Effekte und Ausgestaltungen des vorigen Aspekts, insbesondere des ersten Aspekts, der Erfindung treffen auch auf die in diesem Aspekt bereitgestellte Windenergieanlage zu. Beispielsweise wird mit einem erfindungsgemäßen Rotorblatt der jährliche Energieertrag einer solchen Windenergieanlage erhöht.

Gemäß einem fünften Aspekt der Erfindung wird ein Verfahren zum Verwenden eines Vorflügels zur Erzeugung von Verwirbelungen an einem Rotorblatt für Windenergieanlagen bereitgestellt.

Die vorteilhaften Effekte und Ausgestaltungen der weiteren Aspekte, insbesondere des ersten Aspekts, der Erfindung treffen ebenso auf dieses Verfahren zu.

Bei den erzeugten Verwirbelungen handelt es sich insbesondere um inhomogene Zirkulationsverteilungen auf der Oberfläche des Rotorblatts, die in einer Anreicherung der Grenzschicht mit energiereicher Strömung resultiert und somit den Auftrieb sowie die aerodynamischen Eigenschaften des Rotorblatts optimieren.

Das Verwenden des Vorflügels bezieht sich vorzugsweise auf eine Anwendung an einem Rotorblatt einer Windenergieanlage derart, dass der Vorflügel an dem Rotorblatt befestigt wird und die aerodynamischen Eigenschaften des Rotorblatts optimiert.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration einer Windenergieanlage,
- Fig. 2: eine schematische Darstellung zur Illustration eines Windparks,
- Fig. 3: eine schematische Darstellung zur Illustration eines ersten Ausführungsbeispiels eines erfindungsgemäßen Rotorblatts,
- Fig. 4: eine weitere schematische Darstellung zur Illustration des ersten Ausführungsbeispiels eines erfindungsgemäßen Rotorblatts,
- Fig. 5: eine schematische Darstellung zur Illustration eines zweiten Ausführungsbeispiels eines erfindungsgemäßen Rotorblatts,
- Fig. 6: eine weitere schematische Darstellung zur Illustration des zweiten Ausführungsbeispiels eines erfindungsgemäßen Rotorblatts,
- Fig. 7: eine schematische Darstellung zur Illustration eines dritten Ausführungsbeispiels eines erfindungsgemäßen Rotorblatts,
- Fig. 8: eine weitere schematische Darstellung zur Illustration des dritten Ausführungsbeispiels eines erfindungsgemäßen Rotorblatts,
- Fig. 9: ein Blattanstellwinkel-Auftriebskoeffizient-Diagramm,
- Fig. 10: eine schematische Darstellung zur Illustration eines vierten Ausführungsbeispiels eines erfindungsgemäßen Rotorblatts,
- Fig. 11: eine weitere schematische Darstellung zur Illustration des vierten Ausführungsbeispiels eines erfindungsgemäßen Rotorblatts,
- Fig. 12: eine schematische Darstellung zur Illustration eines fünften Ausführungsbeispiels eines erfindungsgemäßen Rotorblatts,
- Fig. 13: eine weitere schematische Darstellung zur Illustration des fünften Ausführungsbeispiels eines erfindungsgemäßen Rotorblatts,
- Fig. 14: eine schematische Darstellung zur Illustration eines sechsten Ausführungsbeispiels eines erfindungsgemäßen Rotorblatts,
- Fig. 15: eine weitere schematische Darstellung zur Illustration des sechsten Ausführungsbeispiels eines erfindungsgemäßen Rotorblatts, und
- Fig. 16: eine schematische Darstellung zur Illustration eines siebten Ausführungsbeispiels eines erfindungsgemäßen Rotorblatts,
- Fig. 17: ein schematisches Ablaufdiagramm eines Ausführungsbeispiels eines erfindungsgemäßen Verfahrens.

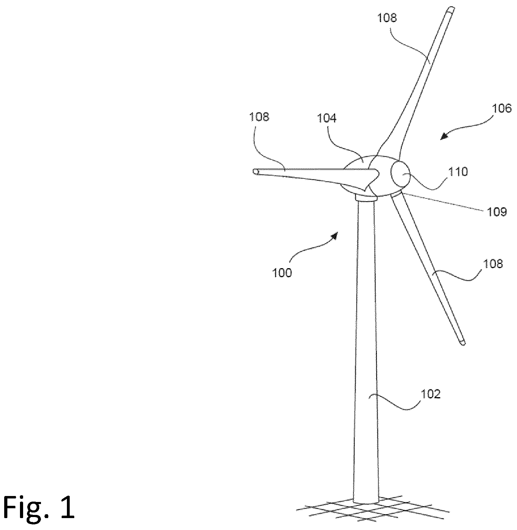

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

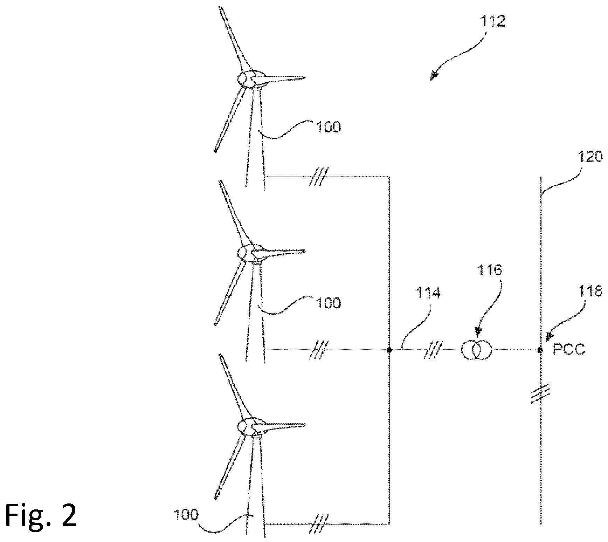

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

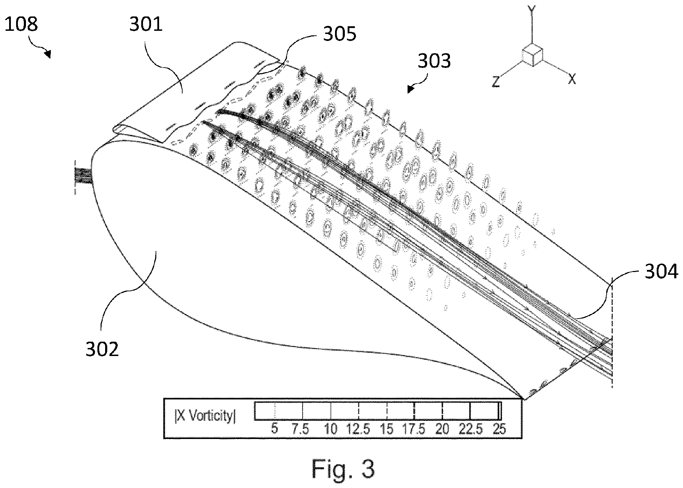

Figur 3 zeigt eine schematische Darstellung zur Illustration eines ersten Ausführungsbeispiels eines erfindungsgemäßen Rotorblatts 108 umfassend einen Vorflügel 301 und einen Hauptflügel 302 sowie durch das Rotorblatt 108 induzierte Wirbelstrukturen. Der Vorflügel 301 ist dabei auf der Saugseite des Hauptflügels 302 mit einem Abstand zum Hauptflügel 302 angeordnet. Dieser Abstand zum Hauptflügel 302 variiert entlang der Profiltiefe des Vorflügels 301. Im Bereich der Hinterkante des Vorflügels 301 varriiert der Abstand zum Hauptflügel 302 ebenfalls in Rotorblattlängsrichtung, da die Hinterkante 305 des Vorflügels 301 im Wesentlichen senkrecht zur Profiltiefenrichtung des Vorflügels 301 gewellt ausgestaltet ist.

Der Vorflügel 301 weist somit eine aerodynamische Form derart auf, dass sich auf der Saugseite des Hauptflügels 302 eine inhomogene Zirkulationsverteilung 303 ausbildet. Dies wirkt einem Strömungsabriss auf der Saugseite des Rotorblatts 108 entgegen und ermöglicht somit eine aggressivere Stellung des Rotorblatts 108, die zu eine, erhöhten Auftrieb und letztendlich in einer erhöhten Stromproduktion der Windenergieanlage 100 resultiert.

Die inhomogene Zirkulationsverteilung 303 ist als Schnittansichten der Verteilung der Wirbelstärke auf der Saugseite des Hauptflügels 302 an verschiedenen Positionen in Profiltiefenrichtung des Hauptflügels 302 angedeutet. Die unterschiedlichen Strichtypen dieser Schnittansichten stellen unterschiedliche Wirbelstärken dar. Die Wirbelstärken in einem Bereich zwischen zweier solcher Striche mit unterschiedlichem Strichtyp liegen also zwischen den zwei Wirbelstärkenwerten, die durch die jeweiligen Striche angedeutet sind. Die Wirbelstärke, auch Wirbeldichte, Wirbelhaftigkeit oder Vortizität genannt, beziffert eine zentrale Größe der Strömungsmechanik und der Meteorologie, indem sie dem Strudel und den kreis- oder spiralförmigen Strömungen ein Feld von Geschwindigkeiten zuordnet. Neben den Schnittansichten ist die Luftströmung ebenfalls durch die langen durchgezogenen Linien angedeutet, die je einen Strömungspfad 304 angeben. Die Verteilung der Wirbelstärke stammt aus einer komplexen computergestützten Simulation des Rotorblatts 108.

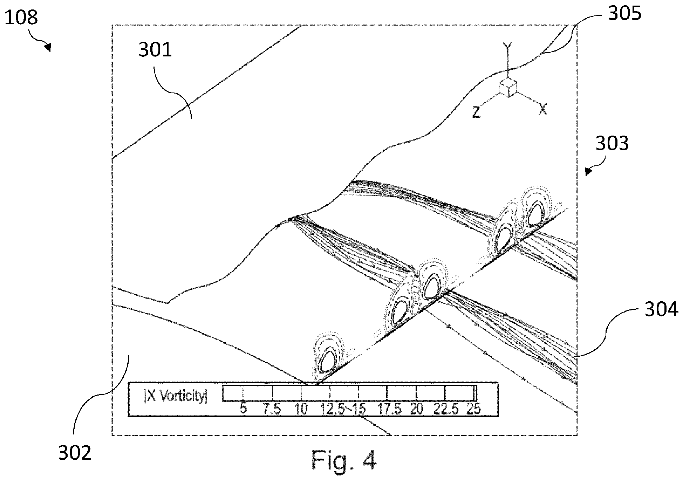

Figur 4 zeigt eine weitere schematische Darstellung zur Illustration des ersten Ausführungsbeispiels eines erfindungsgemäßen Rotorblatts 108. Figur 4 zeigt einen vergrößert dargestellten Ausschnitt der Figur 3. In Figur 4 ist die durch den Vorflügel 301 und insbesondere durch die gewellte Hinterkante 305 des Vorflügels 301 erzeugte inhomogene Zirkulationsverteilung 303 der Luft auf der Saugseite des Rotorblatts 108 gezeigt.

Die gewellte Ausgestaltung der Hinterkante 305 des Vorflügels 301 bewirkt eine inhomogene Verteilung der Wirbelstärke auf der Saugseite des Hauptflügels 302. An Hinterkantenpositionen mit größerem Abstand zur Saugseite des Hauptflügels 302 bilden sich in Profiltiefenrichtung des Hauptflügels 302 über dem Hauptflügel 302 stärkere Wirbel, als an Hinterkantenpositionen mit geringerem Abstand zur Saugseite des Hauptflügels. Die Abstandsvariationen der Hinterkantenpositionen ist dabei durch die gewellte Ausgestaltung der Hinterkante 305 bedingt. Figur 4 zeigt eine charakteristische durch eine gewellte Hinterkante 305 des Vorflügels 301 erzeugte inhomogene Zirkulationsverteilung 303.

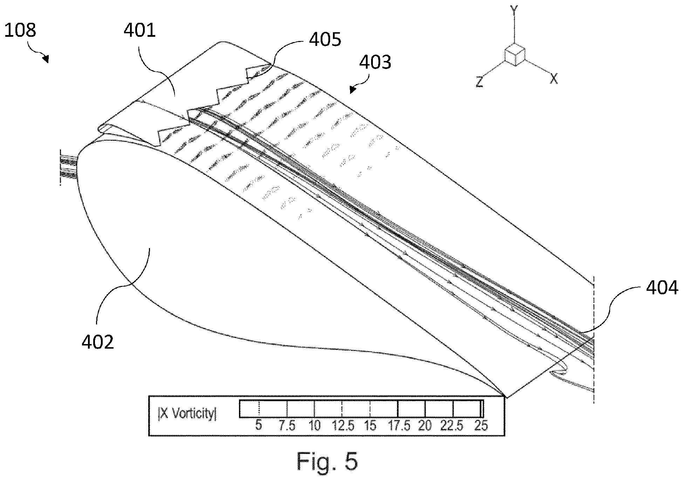

Figur 5 zeigt eine schematische Darstellung zur Illustration eines zweiten Ausführungsbeispiels eines erfindungsgemäßen Rotorblatts 108 umfassend einen Vorflügel 401 und einen Hauptflügel 402 sowie durch das Rotorblatt 108 induzierte Wirbelstrukturen. Der Vorflügel 401 ist dabei auf der Saugseite des Hauptflügels 402 mit einem Abstand zum Hauptflügel 402 angeordnet. Dieser Abstand zum Hauptflügel 402 variiert entlang der Profiltiefe des Vorflügels 401 und in Rotorblattlängsrichtung oder ist alternativ konstant in beide Richtungen ausgestaltet.

Die Hinterkante 405 des Vorflügels 401 weist eine gezackte Kontur in im Wesentlichen Rotorblattlängsrichtung auf, die die Profiltiefe des Vorflügels 401 variiert. Die Größe der Zacken in Profiltiefenrichtung des Vorflügels 401 sowie in im Wesentlichen Rotorblattlängsrichtung bleibt dabei in Rotorblattlängsrichtung konstant, oder ist alternativ variabel ausgestaltet, bevorzugt abhängig von der lokalen Profiltiefe des Vorflügels 401 und/oder von der Position in Rotorblattlängsrichtung.

Der Vorflügel 401 weist somit eine aerodynamische Form derart auf, dass sich auf der Saugseite des Hauptflügels 402 eine inhomogene Zirkulationsverteilung 403 ausbildet. Dies wirkt einem Strömungsabriss auf der Saugseite des Rotorblatts 108 entgegen und ermöglicht somit eine aggressivere Stellung des Rotorblatts 108, die in einem erhöhten Auftrieb und letztendlich in einer erhöhten Stromproduktion der Windenergieanlage 100 resultiert.

Die inhomogene Zirkulationsverteilung 403 ist als Schnittansichten der Verteilung der Wirbelstärke auf der Saugseite des Hauptflügels 402 an verschiedenen Positionen in Profiltiefenrichtung des Hauptflügels 402 angedeutet. Die unterschiedlichen Strichtypen dieser Schnittansichten stellen unterschiedliche Wirbelstärken dar. Die Wirbelstärken in einem Bereich zwischen zweier solcher Striche mit unterschiedlichem Strichtyp liegen also zwischen den zwei Wirbelstärkenwerten, die durch die jeweiligen Striche angedeutet sind. Die Wirbelstärke, auch Wirbeldichte, Wirbelhaftigkeit oder Vortizität genannt, beziffert eine zentrale Größe der Strömungsmechanik und der Meteorologie, indem sie dem Strudel und den kreis- oder spiralförmigen Strömungen ein Feld von Geschwindigkeiten zuordnet. Neben den Schnittansichten ist die Luftströmung ebenfalls durch die langen durchgezogenen Linien angedeutet, die je einen Strömungspfad 404 angeben. Die Verteilung der Wirbelstärke stammt aus einer komplexen computergestützten Simulation des Rotorblatts 108.

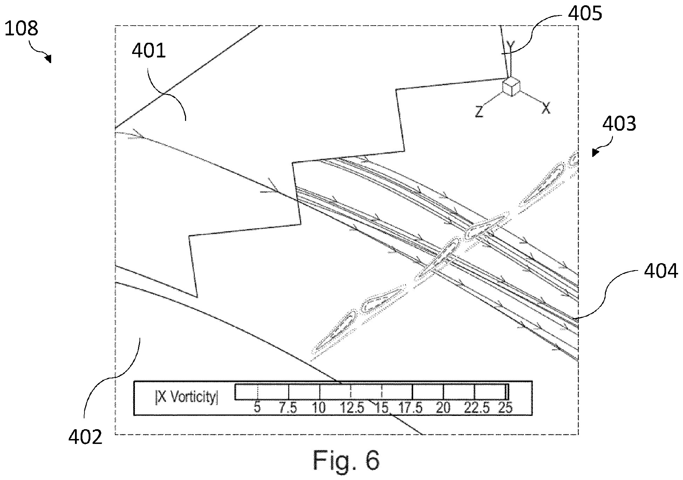

Figur 6 zeigt eine weitere schematische Darstellung zur Illustration des zweiten Ausführungsbeispiels eines erfindungsgemäßen Rotorblatts 108. Figur 6 zeigt einen vergrößert dargestellten Ausschnitt der Figur 5. In Figur 6 ist die durch den Vorflügel 401 und insbesondere durch die gezackte Hinterkante 405 des Vorflügels 401 erzeugte inhomogene Zirkulationsverteilung 403 der Luft auf der Saugseite des Rotorblatts 108 gezeigt.

Die gewellte Ausgestaltung der Hinterkante 405 des Vorflügels 401 bewirkt eine inhomogene Verteilung der Wirbelstärke auf der Saugseite des Hauptflügels 402. In dieser Ausgestaltung bilden sich starke Wirbel zwischen Positionen in Rotorblattlängsrichtung mit maximaler und minimaler Profiltiefe des Vorflügels 401. Die Variationen der Profiltiefe des Vorflügels 401 ist dabei durch die gezackte Ausgestaltung der Hinterkante 405 bedingt. Figur 6 zeigt eine charakteristische durch eine gezackte Hinterkante 405 des Vorflügels 401 erzeugte inhomogene Zirkulationsverteilung 403.

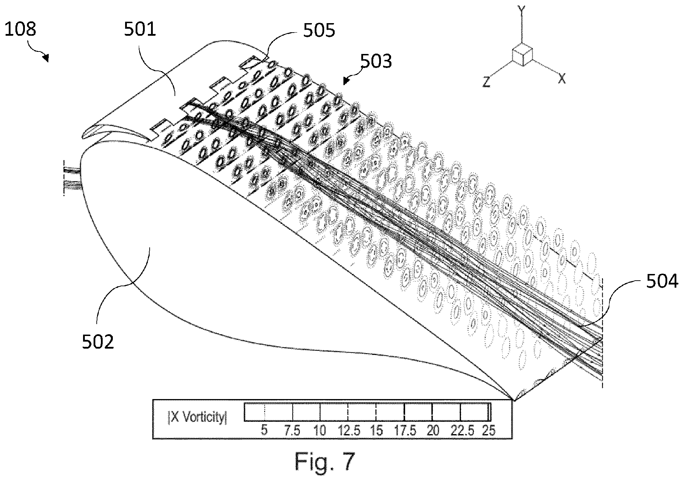

Figur 7 zeigt eine schematische Darstellung zur Illustration eines dritten Ausführungsbeispiels eines erfindungsgemäßen Rotorblatts 108 umfassend einen Vorflügel 501 und einen Hauptflügel 502 sowie durch das Rotorblatt 108 induzierte Wirbelstrukturen. Der Vorflügel 501 ist dabei auf der Saugseite des Hauptflügels 502 mit einem Abstand zum Hauptflügel 502 angeordnet. Dieser Abstand zum Hauptflügel 502 variiert entlang der Profiltiefe des Vorflügels 501 und in Rotorblattlängsrichtung oder ist alternativ konstant in beide Richtungen ausgestaltet.

Die Hinterkante 505 des Vorflügels 501 weist eine gestufte Kontur in im Wesentlichen Rotorblattlängsrichtung auf, die die Profiltiefe des Vorflügels 501 variiert. Die Größe der Stufen in Profiltiefenrichtung des Vorflügels 501 sowie in im Wesentlichen Rotorblattlängsrichtung ist dabei in Rotorblattlängsrichtung konstant, oder alternativ variabel ausgestaltet, bevorzugt abhängig von der lokalen Profiltiefe des Vorflügels 501 und/oder von der Position in Rotorblattlängsrichtung. Der Vorflügel 501 weist somit eine aerodynamische Form derart auf, dass sich auf der Saugseite des Hauptflügels 502 eine inhomogene Zirkulationsverteilung 503 ausbildet. Dies wirkt einem Strömungsabriss auf der Saugseite des Rotorblatts 108 entgegen und ermöglicht somit eine aggressivere Stellung des Rotorblatts 108, die in einem erhöhten Auftrieb und letztendlich in einer erhöhten Stromproduktion der Windenergieanlage 100 resultiert.

Die inhomogene Zirkulationsverteilung 503 ist als Schnittansichten der Verteilung der Wirbelstärke auf der Saugseite des Hauptflügels 502 an verschiedenen Positionen in Profiltiefenrichtung des Hauptflügels 502 angedeutet. Die unterschiedlichen Strichtypen dieser Schnittansichten stellen unterschiedliche Wirbelstärken dar. Die Wirbelstärken in einem Bereich zwischen zweier solcher Striche mit unterschiedlichem Strichtyp liegen also zwischen den zwei Wirbelstärkenwerten, die durch die jeweiligen Striche angedeutet sind. Die Wirbelstärke, auch Wirbeldichte, Wirbelhaftigkeit oder Vortizität genannt, beziffert eine zentrale Größe der Strömungsmechanik und der Meteorologie, indem sie dem Strudel und den kreis- oder spiralförmigen Strömungen ein Feld von Geschwindigkeiten zuordnet. Neben den Schnittansichten ist die Luftströmung ebenfalls durch die langen durchgezogenen Linien angedeutet, die je einen Strömungspfad 504 angeben. Die Verteilung der Wirbelstärke stammt aus einer komplexen computergestützten Simulation des Rotorblatts 108.

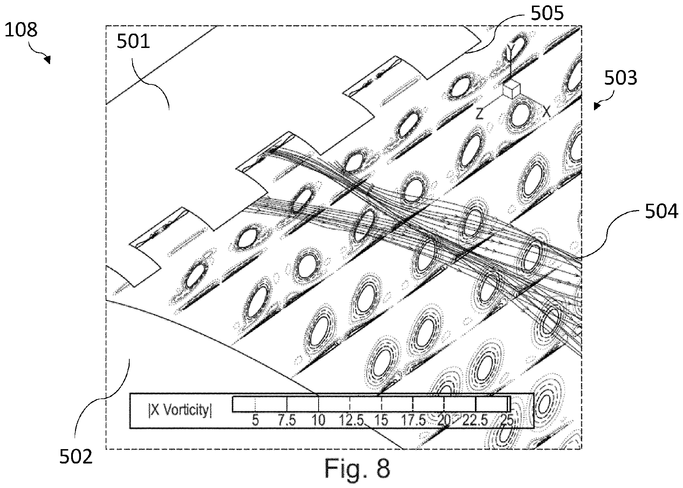

Figur 8 zeigt eine weitere schematische Darstellung zur Illustration des dritten Ausführungsbeispiels eines erfindungsgemäßen Rotorblatts 108. Figur 8 zeigt einen vergrößert dargestellten Ausschnitt der Figur 7. In Figur 8 ist die durch den Vorflügel 501 und insbesondere durch die gestufte Hinterkante 505 des Vorflügels 501 erzeugte inhomogene Zirkulationsverteilung 503 der Luft auf der Saugseite des Rotorblatts 108 gezeigt.

Die gestufte Ausgestaltung der Hinterkante 505 des Vorflügels 501 bewirkt eine inhomogene Verteilung der Wirbelstärke auf der Saugseite des Hauptflügels 502. In dieser Ausgestaltung wechseln sich starke Wirbel und schwache Wirbel zwischen Positionen in Rotorblattlängsrichtung mit maximaler und minimaler Profiltiefe des Vorflügels 501 ab. Die Variationen der Profiltiefe des Vorflügels 501 ist dabei durch die gestufte Ausgestaltung der Hinterkante 505 bedingt. Figur 8 zeigt eine charakteristische durch eine gestufte Hinterkante 505 des Vorflügels 501 erzeugte inhomogene Zirkulationsverteilung 503.

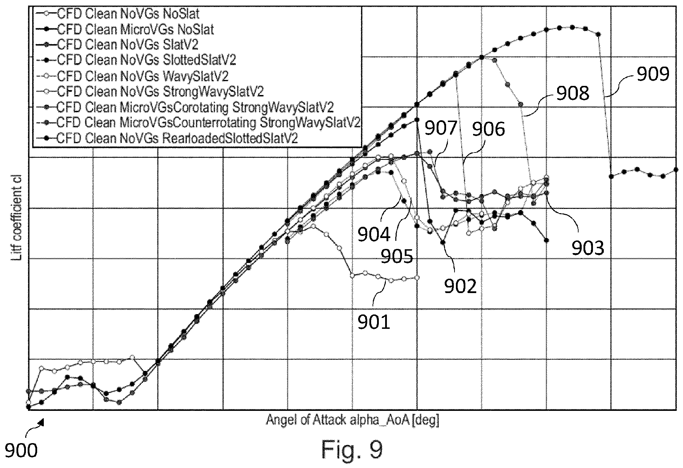

Figur 9 zeigt ein Blattanstellwinkel-Auftriebskoeffizient-Diagramm, das den Verlauf eines Auftriebskoeffizienten *cl* eines Rotorblatts in verschiedenen Ausgestaltungen für verschiedene Blattanstellwinkel *alpha_AoA*, auch Anstellwinkel, darstellt. Die Daten dieses Diagramms stammen aus einer Simulation, die den Auftriebskoeffizienten für ein Rotorblatt in verschiedenen Ausgestaltungen mit und ohne Anbauteile wie Vorflügel und/oder Vortex-generatoren für verschiedene Blattanstellwinkel bei sonst gleichen Bedingungen simuliert.

In einer ersten Ausgestaltung umfasst das Rotorblatt lediglich einen Hauptflügel und weder einen Vorflügel, noch weitere Vortexgeneratoren. Diese erste Ausgestaltung weist einen ersten Verlauf 901 als Auftriebskoeffizient auf.

In einer zweiten Ausgestaltung umfasst das Rotorblatt einen Hauptflügel und Vortexgeneratoren, jedoch keinen Vorflügel. Bei den Vortexgeneratoren handelt es sich dabei um bekannte Vortexgeneratoren, beispielsweise dreieckige Elemente mit mindestens einer aerodynamisch wirksamen Fläche, die auf bekannte Weise auf dem Rotorblatt, insbesondere in einem Blattwurzel-nahen Bereich angeordnet sind. Diese zweite Ausgestaltung weist einen zweiten Verlauf 902 als Auftriebskoeffizient auf.

In einer dritten Ausgestaltung umfasst das Rotorblatt einen Hauptflügel und einen Vorflügel, jedoch keine weiteren Vortexgeneratoren. Der Vorflügel ist dabei als schlichte Slat ohne weitere Modifizierung der Hinterkante, also mit einer geraden Kontur, ausgestaltet. Diese dritte Ausgestaltung weist einen dritten Verlauf 903 als Auftriebskoeffizient auf.

In einer vierten Ausgestaltung umfasst das Rotorblatt 108 einen Hauptflügel 502 und einen Vorflügel 501, jedoch keine weiteren Vortexgeneratoren. Der Vorflügel 501 weist dabei eine gestufte Hinterkante 505 auf. In dieser Ausgestaltung handelt es sich um ein erfindungsgemäßes Rotorblatt 108. Diese vierte Ausgestaltung weist einen vierten Verlauf 904 als Auftriebskoeffizient auf.

In einer fünften Ausgestaltung umfasst das Rotorblatt 108 einen Hauptflügel und einen Vorflügel, jedoch keine weiteren Vortexgeneratoren. Der Vorflügel weist dabei eine in Profildickenrichtung gewellte Hinterkante auf. In dieser Ausgestaltung handelt es sich um ein erfindungsgemäßes Rotorblatt 108. Diese fünfte Ausgestaltung weist einen fünften Verlauf 905 als Auftriebskoeffizient auf.

In einer sechsten Ausgestaltung umfasst das Rotorblatt 108 einen Hauptflügel 302 und einen Vorflügel 301, jedoch keine weiteren Vortexgeneratoren. Der Vorflügel 301 weist dabei eine stark gewellte Hinterkante 305 auf. In dieser Ausgestaltung handelt es sich um ein erfindungsgemäßes Rotorblatt 108. Die Hinterkante 305 des Vorflügels 301 in dieser sechsten Ausgestaltung ist stärker gewellt als die Hinterkante des Vorflügels in der fünften Ausgestaltung. Stärker gewellt bedeutet dabei, dass eine Amplitude der Welle senkrecht zur Oberfläche des Vorflügels größer ist, die Hinterkante des Vorflügels also stärker variiert. Diese sechste Ausgestaltung weist einen sechsten Verlauf 906 als Auftriebskoeffizient auf.

In einer siebten Ausgestaltung umfasst das Rotorblatt 108 zusätzlich zu der sechsten Ausgestaltung, also dem Hauptflügel 302 und dem Vorflügel 301 mit stark gewellter Hinterkante 305, co-rotierende Vortexgeneratoren 603. Die co-rotierenden Vortexgeneratoren 603 sind dabei vorzugsweise hinter dem Vorflügel auf der Saugseite des Hauptflügels angeordnet. In dieser Ausgestaltung handelt es sich um ein erfindungsgemäßes Rotorblatt 108. Diese siebte Ausgestaltung weist einen siebten Verlauf 907 als Auftriebskoeffizient auf.

Zusätzlich ist denkbar, Vortexgeneratoren auf dem Vorflügel einsetzen, diese müssten dann aber auf die Größe des Vorflügels runter skaliert werden. Gerade im Beispiel der Rear-Ioaded-Slotted-Slat kann damit die erzeugte Wirbelstärke noch weiter erhöht werden.

Die Kombination der Vortexgeneratoren auf dem Hauptflügel mit der Zirkulationsvariation des Vorflügels ergibt insbesondere dann Sinn, wenn die Ausprägung am Vorflügel (z.B. aus strukturellen Gründen) zu schwach ist und dann durch die Vortexgeneratoren unterstützt werden soll.

In einer achten Ausgestaltung umfasst das Rotorblatt 108 zusätzlich zu der sechsten Ausgestaltung, also dem Hauptflügel 302 und dem Vorflügel 301 mit stark gewellter Hinterkante 305, konter-rotierende Vortexgeneratoren 703. Die konter-rotierenden Vortexgeneratoren 703 sind dabei vorzugsweise hinter dem Vorflügel auf der Saugseite des Hauptflügels angeordnet. In dieser Ausgestaltung handelt es sich um ein erfindungsgemäßes Rotorblatt 108. Diese achte Ausgestaltung weist einen achten Verlauf 908 als Auftriebskoeffizient auf.

Im Gegensatz zu co-rotierenden Vortexgeneratoren, bei denen benachbarte Wirbel an ihrer Berührstelle gegeneinander arbeiten und sich möglicherweise gegenseitig dämpfen, greifen bei konter-rotierenden, counter-rotating, Vortexgeneratoren die Drehrichtungen der Wirbel wie Zahnräder ineinander und verstärken sich somit wechselseitig.

In einer neunten Ausgestaltung umfasst das Rotorblatt 108 einen Hauptflügel und einen Vorflügel, jedoch keine weiteren Vortexgeneratoren. Der Vorflügel weist dabei eine gestufte Hinterkante auf. Zusätzlich ist der Vorflügel rear-loaded ausgestaltet. In dieser Ausgestaltung handelt es sich um ein erfindungsgemäßes Rotorblatt 108. Diese neunte Ausgestaltung weist einen neunten Verlauf 909 als Auftriebskoeffizient auf. "Rear-Ioaded" bedeutet hier, dass das Profil des Vorflügels einen starken unterschied im Druck auf seiner Saug- und Druckseite kurz vor der Hinterkante aufweist. Dadurch erzeugt das Profil einen großen Teil seines Auftriebs im hinteren Bereich. Geometrisch wird das erreicht, in dem im hinteren Teil des Profils eine Krümmung der Wölbung hin zur Oberfläche des Hauptblattes (Druckseite des Vorflügels) eingeführt wird. Die Vorflügelgeometrie weist also einen starken Druckgradienten an der Hinterkante auf, wodurch die Welligkeit stärker zur Wirbelerzeugung wirkt.

Die Rearloaded-Slotted-Slat nutzt diese Ausgestaltung, um bei einer geringeren Größe der Hinterkantenvariation (hier beispielsweise mit einer stufenförmigen Profiltiefe des Vorflügels) eine gleich Starke oder stärkere Wirbelstraße auf dem Hauptflügel zu erreichen.

Wie das Diagramm aus Figur 9 zeigt, weist jede der zweiten bis neunten Ausgestaltung des Rotorblatts ab einem gewissen Anstellwinkel einen größeren Auftriebskoeffizienten auf, als die erste Ausgestaltung, in der das Rotorblatt weder Vorflügel, noch weitere Vortexgeneratoren umfasst.

Bei der Interpretation der einzelnen Verläufe des Auftriebskoeffizienten ist nicht nur der absolute Maximalwert zu betrachten, sondern auch der Anstellwinkel, ab dem der Auftriebskoeffizient stark abnimmt. An diesem Punkt, auch genannt Grenzanstellwinkel oder Stallwinkel, löst sich die Strömung von dem Rotorblatt ab, sodass ab diesem Anstellwinkelwert sich das Rotorblatt im Strömungsabriss befindet. Es gilt bei zunehmenden Werten für den Anstellwinkel, dass der Auftriebskoeffizient bis zu diesem Grenzanstellwinkel, der zwischen den einzelnen Ausgestaltungen des Rotorblatts variiert, zunimmt. Je später die Strömungsablösung eintritt, desto höhere absolute Werte für den Auftriebskoeffizienten werden in der Regel erreicht. Eine Ausnahme hierzu stellt der Verlauf 902 verglichen mit den weiteren Verläufen dar. Besonders vorteilhaft wirken sich die sechste Ausgestaltung, die achte Ausgestaltung und die neunte Ausgestaltung des Rotorblatts auf den Auftriebskoeffizienten sowie den Grenzanstellwinkel aus.

Figur 9 zeigt demnach einen Vergleich der Auftriebspolaren verschiedener Slat Geometrien im Vergleich zum Profil ohne Vorflügel, sowie mit "normalen" Vortexgeneratoren. Durch die Erfindung wird je nach Variante eine Erhöhung des Grenzanstellwinkels um bis zu 20° gegenüber der Variante ohne Elemente erreicht, während eine normale Slat bzw. VGs nur eine Verzögerung des Strömungsabrisses um ca. 7.5° erreicht.

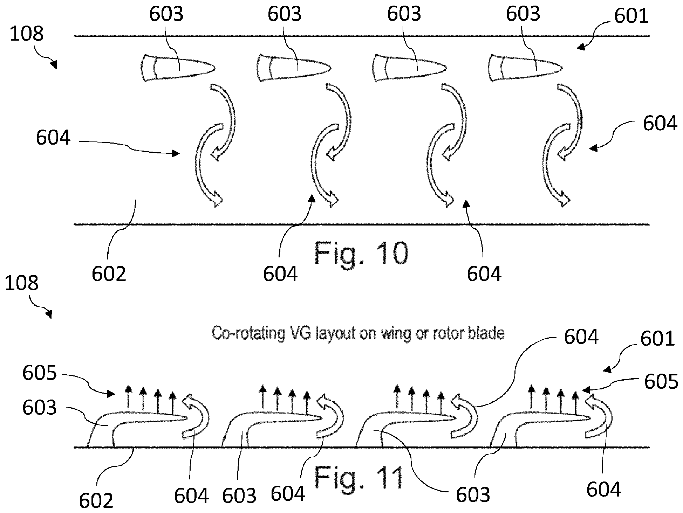

Figur 10 zeigt eine schematische Darstellung zur Illustration eines vierten Ausführungsbeispiels eines erfindungsgemäßen Rotorblatts 108. In diesem Ausführungsbeispiel sind mehrere co-rotierende Vortexgeneratoren 603 auf einem Hauptflügel 602 des Rotorblatts 108 angebracht. Die Vortexgeneratoren 603 werden co-rotierend genannt, da sie derart ausgestaltet und angeordnet sind, dass sie Verwirbelungen der Luft mit einer untereinander gleichen Wirbelrichtung generieren.

In Figur 10 ist beispielsweise angedeutet, dass die generierten Wirbel 604 der co-rotierenden Vortexgeneratoren 603 von den Vortexgeneratoren 603 in Richtung Hinterkante des Hauptflügels 602 zunächst einer Richtung in Uhrzeigersinn und anschließend einer Richtung gegen den Uhrzeigersinn folgen.

Hierbei handelt es sich um eine vereinfachte Darstellung um die Wirkung der co-rotierenden Vortexgeneratoren 603 zu veranschaulichen. In Realität handelt es sich bei den Wirbeln 604 um hoch komplexe dreidimensionale Strömungen. Vereinfacht gesprochen zeigt Figur 10, dass jeder der co-rotierenden Vortexgeneratoren 603 einen gleichen Wirbel 604 generiert.

In einer bevorzugten Ausgestaltung sind eine Vielzahl von co-rotierenden Vortexgeneratoren 603 auf dem Hauptflügel 602 angebracht und bilden einen segmentierten Vorflügel 601. In dieser Ausgestaltung sind die Vielzahl von co-rotierenden Vortexgeneratoren 603 beispielsweise in einem Bereich nahe der Vorderkante des Hauptflügels 602 mit einem im Wesentlichen gleichen absoluten Abstand zur Vorderkante des Hauptflügels 602 oder mit einem gleichen relativen Abstand zur Vorderkante des Hauptflügels 602, abhängig von einer lokalen Profiltiefe des Hauptflügels 602, angeordnet.

Die aerodynamisch wirksamen Flächen der Vielzahl von co-rotierenden Vortexgeneratoren 603 wirken zusammengenommen somit ähnlich wie ein Vorflügel. Aufgrund eines insbesondere geringen Abstands in Rotorblattlängsrichtung zwischen jedem der Vielzahl von co-rotierenden Vortexgeneratoren 603, ist von einem segmentiertem Vorflügel 601 die Rede.

Die Vielzahl von co-rotierenden Vortexgeneratoren 603 verbessert, mit einer ähnlichen Wirkung wie ein erfindungsgemäßer nicht-segmentierter Vorflügel, die aerodynamischen Eigenschaften eines Rotorblatts und insbesondere dessen Auftrieb, durch die Generierung von inhomogenen Zirkulationsverteilungen auf einer Oberfläche des Hauptflügels 602. Bei dem in Figur 10 gezeigten Rotorblatt 108 handelt es sich somit um ein erfindungsgemäßes Rotorblatt.

In einer alternativen Ausgestaltung, die in Figur 10 nicht gezeigt ist, sind die Vielzahl von co-rotierenden Vortexgeneratoren 603 auf einer Druck- und/oder Saugseite eines Vorflügels angebracht. Die Vielzahl von co-rotierenden Vortexgeneratoren 603 verbessern, auch in dieser Ausgestaltung, die aerodynamischen Eigenschaften eines Rotorblatts und insbesondere dessen Auftrieb, durch die Generierung von inhomogenen Zirkulationsverteilungen auf einer Oberfläche des Hauptflügels 602. Somit handelt es sich bei einem Rotorblatt mit dieser alternativen Ausgestaltung ebenfalls um ein erfindungsgemäßes Rotorblatt.

Figur 11 zeigt eine weitere schematische Darstellung zur Illustration des vierten Ausführungsbeispiels eines erfindungsgemäßen Rotorblatts 108. Figur 11 zeigt das Rotorblatt 108 aus Figur 10, umfassend mehrere co-rotierenden Vortexgeneratoren 603 angeordnet auf einer Oberfläche eines Hauptflügels 602, in einer anderen Ansicht. Die Ansicht der Figur 11 ist verglichen mit der Ansicht der Figur 10 um 90° um eine in Rotorblattlängsrichtung gerichtete Achse gedreht.

Figur 11 zeigt ebenfalls, dass jeder der mehreren co-rotierenden Vortexgeneratoren 603 einen gleichgerichteten Wirbel 604 generiert. Zusätzlich zeigt Figur 11 einen zusätzlich von jedem der co-rotierenden Vortexgeneratoren 603 generierten Auftrieb 605. Die aerodynamischen Flächen der co-rotierenden Vortexgeneratoren 603 verbessern die Aerodynamik des Rotorblatt 108 aufgrund generierter Wirbel 604, die einer Strömungsablösung von einer Oberfläche des Hauptflügels 602 entgegenwirken, und zusätzlich generiertem Auftrieb 605.

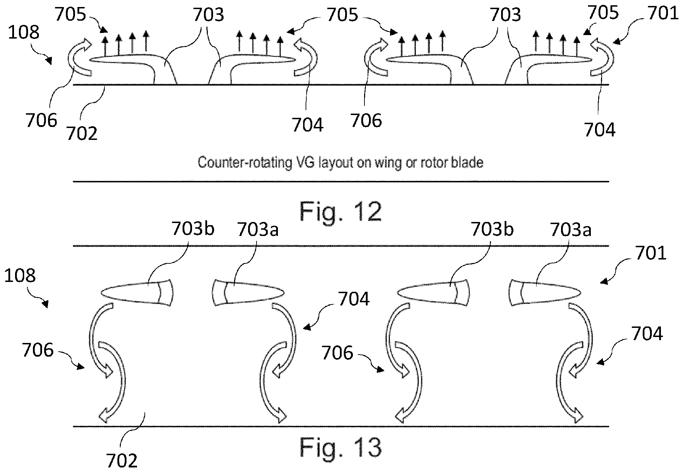

Figur 12 zeigt eine schematische Darstellung zur Illustration eines fünften Ausführungsbeispiels eines erfindungsgemäßen Rotorblatts 108. Figur 12 zeigt das Rotorblatt 108 in einer Ausgestaltung, umfassend mehrere kontra-rotierenden Vortexgeneratoren 703 angeordnet auf einer Oberfläche eines Hauptflügels 602.

Die Vortexgeneratoren 703 werden kontra-rotierend genannt, da sie derart ausgestaltet und angeordnet sind, dass je zwei von ihnen, bevorzugt je zwei kontra-rotierende Vortex-generatoren 703 eines Paares, Verwirbelungen der Luft mit entgegengesetzten Wirbelrichtung generieren. Zusätzlich zeigt Figur 12 einen zusätzlich von jedem der kontra-rotierenden Vortexgeneratoren 703 generierten Auftrieb 705. Die aerodynamischen Flächen der kontra-rotierenden Vortexgeneratoren 703 verbessern die Aerodynamik des Rotorblatt 108 aufgrund generierter Wirbel 704, 706, die einer Strömungsablösung von einer Oberfläche des Hauptflügels 702 entgegenwirken, und zusätzlich generiertem Auftrieb 705.

In einer weiter bevorzugten Ausführungsform des Rotorblatts 108 in diesem Ausführungsbeispiel, sind die Vortexgeneratoren 703 und Vortexgeneratoren 603 aus den Figuren 10 und 11 gleich ausgestaltet. In Figur 12 ist lediglich jeder zweite der mehreren Vortexgeneratoren 703 anders angeordnet, nämlich um 180° gedreht angeordnet im Vergleich zu Figur 11.

Figur 13 zeigt eine weitere schematische Darstellung zur Illustration des fünften Ausführungsbeispiels eines erfindungsgemäßen Rotorblatts 108. Die Ansicht der Figur 13 ist verglichen mit der Ansicht der Figur 12 um 90° um eine in Rotorblattlängsrichtung gerichtete Achse gedreht.

Figur 13 zeigt das Rotorblatt 108 aus Figur 12, umfassend mehrere kontra-rotierende Vortexgeneratoren 703a, 703b, *counter-rotating VGs*, angeordnet auf einem Hauptflügel 702 des Rotorblatts 108. Die kontra-rotierenden Vortexgeneratoren 703a, 703b sind bevorzugt paarweise auf dem Hauptflügel 702 angeordnet.

Die Vortexgeneratoren 703a, 703b werden kontra-rotierend genannt, da sie derart ausgestaltet und angeordnet sind, dass je zwei von ihnen, bevorzugt je zwei kontra-rotierende Vortexgeneratoren 703 eines Paares, umfassend einen Vortexgenerator 703a und einen Vortexgenerator 703b, Verwirbelungen der Luft mit entgegengesetzten Wirbelrichtung generieren. In Figur 13 ist beispielsweise angedeutet, dass die generierten Wirbel 704 eines ersten Vortexgenerators 703a eines Paares von den Vortexgeneratoren in Richtung Hinterkante des Hauptflügels 702 zunächst einer Richtung in Uhrzeigersinn und anschließend einer Richtung gegen den Uhrzeigersinn folgen. Die generierten Wirbel 706 eines zweiten Vortexgenerators 703b des Paares, folgen von den Vortexgeneratoren in Richtung Hinterkante des Hauptflügels 702 zunächst einer Richtung in gegen den Uhrzeigersinn und anschließend einer Richtung in Uhrzeigersinn. Hierbei handelt es sich um eine vereinfachte Darstellung um die Wirkung der kontra-rotierenden Vortexgeneratoren 703a, 703b zu veranschaulichen. In Realität handelt es sich bei den Wirbeln 704, 706 um hoch komplexe dreidimensionale Strömungen. Vereinfacht gesprochen zeigt Figur 13, dass jeder der kontra-rotierenden Vortexgeneratoren 703a einen gleichen Wirbel 704 generiert und jeder der kontra-rotierenden Vortexgeneratoren 703b einen gleichen Wirbel 706 generiert. Weiter vereinfacht gesprochen sind die Wirbel 704 und die Wirbel 706 spiegelsymmetrisch zu einer in Profiltiefenrichtung des Hauptflügels 702 gerichteten Achse.

In einer bevorzugten Ausgestaltung sind eine Vielzahl von kontra-rotierenden Vortexgeneratoren 703a, 703b auf dem Hauptflügel 702 angeordnet und bilden einen segmentierten Vorflügel 701. In dieser Ausgestaltung sind die Vielzahl von kontra-rotierenden Vortexgeneratoren 703a, 703b beispielsweise in einem Bereich nahe der Vorderkante des Hauptflügels 702 mit einem im Wesentlichen gleichen absoluten Abstand zur Vorderkante des Hauptflügels 702 oder mit einem gleichen relativen Abstand zur Vorderkante des Hauptflügels 702, abhängig von einer lokalen Profiltiefe des Hauptflügels 702, angeordnet. Die aerodynamisch wirksamen Flächen der Vielzahl von kontra-rotierenden Vortexgeneratoren 703a, 703b wirken zusammengenommen somit ähnlich wie ein Vorflügel. Aufgrund eines insbesondere geringen Abstands in Rotorblattlängsrichtung zwischen jedem der Vielzahl von kontra-rotierenden Vortexgeneratoren 703a, 703b, ist von einem segmentiertem Vorflügel 701 die Rede. Die Vielzahl von kontra-rotierenden Vortexgeneratoren 703 verbessert, mit einer ähnlichen Wirkung wie ein erfindungsgemäßer nicht-segmentierter Vorflügel, die aerodynamischen Eigenschaften eines Rotorblatts und insbesondere dessen Auftrieb, durch die Generierung von inhomogenen Zirkulationsverteilungen auf einer Oberfläche des Hauptflügels 702. Bei dem in Figur 13 gezeigten Rotorblatt 108 handelt es sich somit um ein erfindungsgemäßes Rotorblatt.

In einer alternativen Ausgestaltung, die in Figur 13 nicht gezeigt ist, sind die Vielzahl von kontra-rotierenden Vortexgeneratoren 703a, 703b auf einer Druck- und/oder Saugseite eines Vorflügels angebracht. Die Vielzahl von kontra-rotierenden Vortexgeneratoren 703a, 703b verbessern, auch in dieser Ausgestaltung, die aerodynamischen Eigenschaften eines Rotorblatts und insbesondere dessen Auftrieb, durch die Generierung von inhomogenen Zirkulationsverteilungen auf einer Oberfläche des Hauptflügels 702. Somit handelt es sich bei einem Rotorblatt mit dieser alternativen Ausgestaltung ebenfalls um ein erfindungsgemäßes Rotorblatt.

In einer weiter bevorzugten Ausführungsform des Rotorblatts 108 in diesem Ausführungsbeispiel, sind die Vortexgeneratoren 703a, 703b und Vortexgeneratoren 603 aus den Figuren 10 und 11 gleich ausgestaltet. In Figur 13 ist lediglich jeder der Vortexgeneratoren 703b anders angeordnet, nämlich um 180° gedreht angeordnet im Vergleich zu Figur 11.

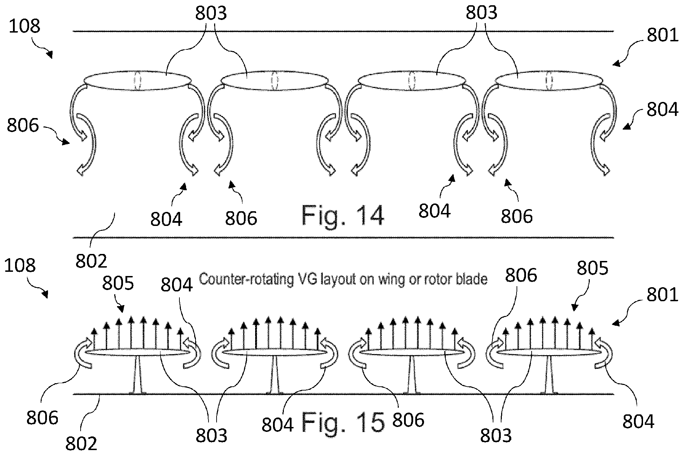

Figur 14 zeigt eine schematische Darstellung zur Illustration eines sechsten Ausführungsbeispiels eines erfindungsgemäßen Rotorblatts 108. Figur 14 zeigt das Rotorblatt 108 in einer Ausgestaltung, umfassend mehrere kontra-rotierenden Vortexgeneratoren 803 angeordnet auf einer Oberfläche eines Hauptflügels 802.

Die Vortexgeneratoren 803 werden kontra-rotierend genannt, da eine aerodynamische Fläche der Vortexgeneratoren 803 kontra-rotierende Wirbel 804, 806 generiert. In Figur 14 ist beispielsweise angedeutet, dass die generierten Wirbel 804 eines Vortexgenerators 803 von dem Vortexgenerator 803 in Richtung Hinterkante des Hauptflügels 802 zunächst einer Richtung in Uhrzeigersinn und anschließend einer Richtung gegen den Uhrzeigersinn folgen. Die generierten Wirbel 806 eines Vortexgenerators 803 folgen von dem Vortexgenerator 803 in Richtung Hinterkante des Hauptflügels 802 zunächst einer Richtung in gegen den Uhrzeigersinn und anschließend einer Richtung in Uhrzeigersinn. Hierbei handelt es sich um eine vereinfachte Darstellung um die Wirkung der kontra-rotierenden Vortexgeneratoren 803 zu veranschaulichen. In Realität handelt es sich bei den Wirbeln 804, 806 um hoch komplexe dreidimensionale Strömungen. Vereinfacht gesprochen zeigt Figur 14, dass jeder der kontra-rotierenden Vortexgeneratoren 803 gleiche Wirbel 804, 806 generiert wobei jeder der kontra-rotierenden Vortexgeneratoren 803 einen gleichen Wirbel 804 und einen gleichen Wirbel 806 generiert. Weiter vereinfacht gesprochen sind die Wirbel 804 und die Wirbel 806 spiegelsymmetrisch zu einer in Profiltiefenrichtung des Hauptflügels 802 gerichteten Achse.

In einer bevorzugten Ausgestaltung sind eine Vielzahl von kontra-rotierenden Vortexgeneratoren 803 auf dem Hauptflügel 802 angeordnet und bilden einen segmentierten Vorflügel 801. In dieser Ausgestaltung sind die Vielzahl von kontra-rotierenden Vortexgeneratoren 803 beispielsweise in einem Bereich nahe der Vorderkante des Hauptflügels 802 mit einem im Wesentlichen gleichen absoluten Abstand zur Vorderkante des Hauptflügels 802 oder mit einem gleichen relativen Abstand zur Vorderkante des Hauptflügels 802, abhängig von einer lokalen Profiltiefe des Hauptflügels 802, angeordnet. Die aerodynamisch wirksamen Flächen der Vielzahl von kontra-rotierenden Vortexgeneratoren 803 wirken zusammengenommen somit ähnlich wie ein Vorflügel. Aufgrund eines insbesondere geringen Abstands in Rotorblattlängsrichtung zwischen jedem der Vielzahl von kontra-rotierenden Vortexgeneratoren 803, ist von einem segmentiertem Vorflügel 801 die Rede. Die Vielzahl von kontra-rotierenden Vortexgeneratoren 803 verbessert, mit einer ähnlichen Wirkung wie ein erfindungsgemäßer nicht-segmentierter Vorflügel, die aerodynamischen Eigenschaften eines Rotorblatts und insbesondere dessen Auftrieb, durch die Generierung von inhomogenen Zirkulationsverteilungen auf einer Oberfläche des Hauptflügels 802. Bei dem in Figur 14 gezeigten Rotorblatt 108 handelt es sich somit um ein erfindungsgemäßes Rotorblatt.

In einer alternativen Ausgestaltung, die in Figur 14 nicht gezeigt ist, sind die Vielzahl von kontra-rotierenden Vortexgeneratoren 803 auf einer Druck- und/oder Saugseite eines Vorflügels angebracht. Die Vielzahl von kontra-rotierenden Vortexgeneratoren 803 verbessern, auch in dieser Ausgestaltung, die aerodynamischen Eigenschaften eines Rotorblatts und insbesondere dessen Auftrieb, durch die Generierung von inhomogenen Zirkulationsverteilungen auf einer Oberfläche des Hauptflügels 802. Somit handelt es sich bei einem Rotorblatt mit dieser alternativen Ausgestaltung ebenfalls um ein erfindungsgemäßes Rotorblatt.

Die Ausgestaltungen des Vorflügels als segmentierter Vorflügel 601, 701, 801 gemäß den Figuren 10, 11, 12, 13 und 14 ist in einem weiteren, nicht in den Figuren gezeigten Ausführungsbeispiel mit einer Geometrieänderung einer Hinterkante der Vortexgeneratoren 603, 703, 803 verbunden, derart, dass die Vortexgeneratoren eine gezackte, gewellte und/oder gestufte Hinterkante aufweisen. Die Kombination dieser Merkmale eines Vorflügels führt ebenfalls zu den vorteilhaften Effekten der einzelnen Merkmale für sich genommen und optimiert diese insbesondere.

Figur 15 zeigt eine weitere schematische Darstellung zur Illustration des sechsten Ausführungsbeispiels eines erfindungsgemäßen Rotorblatts 108. Die Ansicht der Figur 15 ist verglichen mit der Ansicht der Figur 14 um 90° um eine in Rotorblattlängsrichtung gerichtete Achse gedreht. Figur 15 zeigt das Rotorblatt 108 aus Figur 14, umfassend mehrere kontra-rotierende Vortexgeneratoren 803, *counter-rotating VGs*, angeordnet auf einem Hauptflügel 802 des Rotorblatts 108. Figur 15 zeigt ebenfalls, dass jeder der mehreren kontra-rotierenden Vortexgeneratoren 803 Wirbel 804, 806 generiert.

Zusätzlich zeigt Figur 15 einen zusätzlich von jedem der kontra-rotierenden Vortexgeneratoren 803 generierten Auftrieb 805. Die aerodynamischen Flächen der kontra-rotierenden Vortexgeneratoren 803 verbessern die Aerodynamik des Rotorblatt 108 aufgrund generierter Wirbel 804, 806, die einer Strömungsablösung von einer Oberfläche des Hauptflügels 802 entgegenwirken, und zusätzlich generiertem Auftrieb 805.

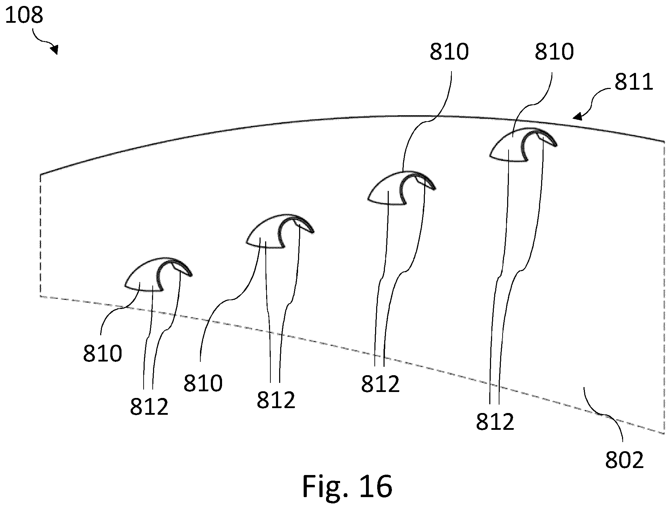

Figur 16 zeigt eine schematische Darstellung zur Illustration eines sechsten Ausführungsbeispiels eines erfindungsgemäßen Rotorblatts 108. Figur 16 zeigt das Rotorblatt 108 in einer Ausgestaltung, umfassend mehrere Tube-Vortexgeneratoren 810 angeordnet auf einer Oberfläche eines Hauptflügels 802, insbesondere auf einer Saugseite des Hauptflügels 802.

Die Tube-Vortexgeneratoren 810 werden so genannt, da je zwei Befestigungen 812 an der Oberfläche des Hauptflügels 802 des Rotorblatts 108 angeordnet sind. Diese je zwei Befestigungen 812 sind zudem in einem Abstand zur Oberfläche des Hauptflügels 802 miteinander verbunden, sodass sie einen Tunnel oder ein kurzes Rohr (engl. *tube*) bilden.

Die mehreren Tube-Vortexgeneratoren 810 bilden zusammengenommen einen segmentierten Vorflügel 811. Dieser segmentierte Vorflügel 811 weist in diesem Ausführungsbeispiel eine Variation in der Profiltiefe und im Einbauwinkel auf, wobei die Profiltiefe insbesondere bis auf einen Wert von 0 reduziert ist, sodass sich Unterbrechungen zwischen den Tube-Vortexgeneratoren 810 ergeben, also ein segmentierter Vorflügel bereitgestellt ist. Die Tube-Vortexgeneratoren 810 sind in diesem Ausführungsbeispiel derart geformt, dass sie jeweils eine im Wesentlichen konstante Querschnittsfläche zwischen Vorflügel und Rotorblatt umfassen.

Entsprechend der Erfindung ist jedoch die Variation des Vorflügels bevorzugt so ausgestaltet, dass der Querschnitt des durchströmten Raums zwischen Vorflügel und den Befestigungen des Vorflügels eine konstante bzw. nur leicht variierende Querschnittsfläche aufweist. Im Falle eines halbseitig offenen Querschnitts an einer Spitze oder Unterbrechung des Vorflügels gilt die radiale Position der Spitze bzw. der Unterbrechung des Vorflügels als Flächenbegrenzung.

Je kleiner der Abstand zwischen den Befestigungen 812, die als Strömungshindernis wirken, im Verhältnis zum Abstand des Vorflügels von der Oberfläche ist, desto relevanter ist es, die Fläche konstant zu halten, um lokale Strömungsablösungen zu verhindern. Insbesondere sind Aufweitungen der Querschnittsfläche des durchströmten Bereichs kritisch. Daher ist es Teil des obigen Ausführungsbeispiels, dass sich der Querschnitt des durchströmten Bereichs zwischen Vorflügel und Rotorblatt um weniger als 20% verändert, bevorzugt um weniger als 5%, wobei die Änderungsrate des Querschnitts so begrenzt dass sich ein äquivalenter Öffnungswinkel von weniger als 10° bevorzugt weniger als 5° ergibt. Als äquivalenter Öffnungswinkel ist hierbei der Winkel eines Kegelstumpfes zu verstehen, der die gleichen Querschnittsflächen und den gleichen Abstand der Flächen aufweist wie ein Abschnitt des Durchströmbereichs zwischen Vorflügel und Rotorblatt. Diese bevorzugte Begrenzung der Flächenänderung gilt hierbei sowohl für den gesamten Abstand zwischen zwei Befestigungen 812 oder Enden der Vorflügelgeometrie, als auch für jeden Teilbereich mit einer Breite entsprechend der Profiltiefe des Vorflügels.

Der Effekt dieses segmentierten Vorflügels 811 umfassend die Tube-Vortexgeneratoren 810 ist ähnlich zu dem Effekt eines nicht-segmentierten Vorflügels mit gewellter Hinterkante. Gegenüber diesem besteht jedoch der zusätzliche Vorteil einer einfacheren Montage und einer Gewichtsreduzierung, die sich positiv auf den Betrieb des Rotorblatts auswirkt.

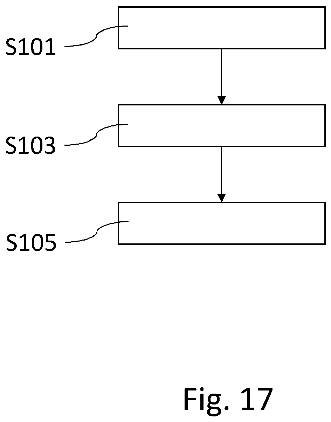

Figur 17 zeigt ein schematisches Ablaufdiagramm eines Ausführungsbeispiels eines erfindungsgemäßen Verfahrens. Das hier gezeigte Ablaufdiagramm stellt ein Ausführungsbeispiel eines erfindungsgemäßen Verfahrens zum Bereitstellen eines erfindungsgemäßen Rotorblatts dar.

Ein erster Schritt S101 umfasst das Auslegen des Rotorblatts als Rotorblatt mit Haupt- und Vorflügel. Der Schritt des Auslegens umfasst in diesem Ausführungsbeispiel theoretische Überlegungen, computergestützte Simulationen sowie einen iterativen Optimierungsprozess, der sowohl die strukturellen als auch die aerodynamischen Eigenschaften des Rotorblatts optimiert.

Ein zweiter Schritt S103 umfasst das Bereitstellen des Vorflügels und des Hauptflügels. Der Schritt des Bereitstellens umfasst in diesem Ausführungsbeispiel eine Herstellung des Vorflügels und des Hauptflügels sowie insbesondere einen Transport des Vorflügels und/oder des Hauptflügels.

Ein dritter Schritt S105 umfasst das Anbringen des Vorflügels an den Hauptflügel. Der Schritt des Anbringens umfasst in diesem Ausführungsbeispiel ein Befestigen des Vorflügels an dem Hauptflügel, beispielsweise ein Verschrauben, Verschweißen, Kleben und/oder Laminieren. Insbesondere umfasst der Schritt des Anbringens die Verwendung von Befestigungsmitteln wie beispielsweise Schrauben, Kleber und/oder Laminat. Als Ergebnis dieses Schritts liegt vorzugsweise ein betriebsfähiges Rotorblatt umfassend den Hauptflügel und den Vorflügel vor. In einer Ausgestaltung des Verfahrens wird der Vorflügel an einem Standort einer Windenergieanlage, an der das Rotorblatt angeordnet wird, an dem Hauptflügel angebracht.

### Bezugszeichen:

100 Windenergieanlage
102 Turm
104 Gondel
106 Rotor
108 Rotorblatt
109 Rotorblattwurzel
110 Spinner
112 Windpark
114 Parknetz
116 Transformator
118 Einspeisepunkt
301, 401, 501 Vorflügel
302, 402, 502, 602, 702, 802 Hauptflügel
303, 403, 503 inhomogene Zirkulationsverteilung
304, 404, 504 Strömungspfad
305 gewellte Hinterkante des Vorflügels
405 gezackte Hinterkante des Vorflügels
505 gestufte Hinterkante des Vorflügels
601, 701, 801, 811 segmentierter Vorflügel
603 co-rotierender Vortexgenerator
604, 704, 706, 804, 806 Wirbel
605, 705, 805 Auftrieb
703, 703a, 703b, 803 kontra-rotierender Vortexgenerator
810 Tube-Vortexgenerator
812 Befestigung
900, 901, 902, 903, 904, 905, 906, 907, 908, 909 Verlauf des Auftriebskoeffizienten

## Patentansprüche

1. Rotorblatt (108) für eine Windenergieanlage (100) umfassend
einen Hauptflügel (302, 402, 502, 602, 702, 802), der sich von einer Rotorblattwurzel bis zu einer Rotorblattspitze in einer Rotorblattlängsrichtung mit einer Rotorblattlänge erstreckt, eine sich zwischen einer Vorderkante und einer Hinterkante des Hauptflügels (302, 402, 502, 602, 702, 802) einstellende Profiltiefe des Hauptflügels (302, 402, 502, 602, 702, 802) und eine sich von der Vorderkante bis zur Hinterkante des Hauptflügels (302, 402, 502, 602, 702, 802) erstreckende Saugseite und Druckseite, zwischen denen sich ein aerodynamisches Profil ausbildet, aufweist und
einen Vorflügel (301, 401, 501, 601, 701, 801), der sich im Wesentlichen in der Rotorblattlängsrichtung erstreckt und eine sich zwischen einer Vorderkante und einer Hinterkante des Vorflügels (301, 401, 501, 601, 701, 801) einstellende Profiltiefe des Vorderflügels (301, 401, 501, 601, 701, 801) und eine sich von der Vorderkante bis zur Hinterkante des Vorflügels (301, 401, 501, 601, 701, 801) erstreckende aerodynamisch wirksame Fläche zur Strömungsbeeinflussung umfassend eine Saugseite und eine Druckseite aufweist,
wobei der Vorflügel (301, 401, 501, 601, 701, 801) am Hauptflügel (302, 402, 502, 602, 702, 802) anbringbar ist,
**dadurch gekennzeichnet, dass**
der Vorflügel (301, 401, 501, 601, 701, 801) eine Geometrie aufweist, die zur Erzeugung einer inhomogenen Zirkulationsverteilung (303, 403, 503) ausgebildet ist.

2. Rotorblatt (108) nach Anspruch 1, wobei die Geometrie des Vorflügels (301, 401, 501) eine Kontur der Hinterkante (305, 405, 505) aufweist, die zur Erzeugung einer inhomogenen Auftriebsverteilung in einem Bereich des Hauptflügels (302, 402, 502, 602, 702, 802), auf den der Vorflügel (301, 401, 501, 601, 701, 801) aerodynamische Auswirkungen hat, insbesondere durch Erzeugung von Verwirbelungen und Energieeintrag in die Grenzschicht, ausgebildet ist.

3. Rotorblatt (108) nach Anspruch 1 oder 2, wobei
der Vorflügel als Slat zur Verlängerung der Profiltiefe des Hauptflügels an der Vorderkante des Hauptflügels ausgebildet ist, und
sich die Profiltiefe des Hauptflügels zwischen der Vorderkante des Vorflügels und der Hinterkante des Hauptflügels einstellt.

4. Rotorblatt (108) nach einem der vorhergehenden Ansprüche, wobei
sich der Vorflügel (301, 401, 501, 601, 701, 801) über eine Länge von mindestens 2%, maximal 50% der Rotorblattlänge, vorzugsweise 10% bis 30% der Rotorblattlänge erstreckt.

5. Rotorblatt (108) nach einem der vorhergehenden Ansprüche, wobei
eine relative Rotorblattlänge das Verhältnis von dem Abstand einer Position auf dem Rotorblatt (108) zur Rotorblattwurzel zur Rotorblattlänge angibt,
sich der Vorflügel (301, 401, 501, 601, 701, 801) maximal von einer ersten relativen Rotorblattlänge von 0% bis 15% zu einer zweiten relativen Rotorblattlänge von 5% bis 50% erstreckt, wobei die zweite relative Rotorblattlänge größer ist als die erste Rotorblattlänge.

6. Rotorblatt (108) nach Anspruch 2, wobei
die Kontur der Hinterkante (305) des Vorflügels (301), insbesondere im Wesentlichen senkrecht zur Profiltiefe des Vorflügels (301), wellig oder gleichmäßig gezackt oder ungleichmäßig gezackt oder gleichmäßig gestuft oder ungleichmäßig gestuft ausgestaltet ist, wobei insbesondere
die Kontur der Hinterkante (305) des Vorflügels (301), vorzugsweise senkrecht zur Profiltiefe des Vorflügels (301), wellig ausgestaltet ist, nämlich mit
einer Amplitude der Welle mit einem Wert zwischen 2% der Profiltiefe des Vorflügels (301) und 20% der Profiltiefe des Vorflügels (301),
einer Periode der Welle mit einem Wert zwischen 1%, insbesondere 5%, der der Profiltiefe des Vorflügels (301) und 500%, insbesondere 200%, der Profiltiefe des Vorflügels (301).

7. Rotorblatt (108) nach einem der vorhergehenden Ansprüche, wobei
der Vorflügel (401, 501) eine wellenartige oder stufenartige oder zackenartige Verteilung der Profiltiefe des Vorflügels (401, 501) in Rotorblattlängsrichtung aufweist, wobei insbesondere
der Vorflügel eine wellenartige Verteilung der Profiltiefe des Vorflügels in Rotorblattlängsrichtung aufweist, nämlich mit
einer Amplitude der Welle mit einem Wert zwischen 2% der Profiltiefe des Vorflügels und 80%, insbesondere 50%, der Profiltiefe des Vorflügels,
einer Periode der Welle mit einem Wert zwischen 5% der der Profiltiefe des Vorflügels und 500%, insbesondere 200%, der Profiltiefe des Vorflügels.

8. Rotorblatt (108) nach einem der vorhergehenden Ansprüche, wobei die Hinterkante des Vorflügels Serrations umfasst.

9. Rotorblatt (108) nach einem der vorhergehenden Ansprüche, wobei
der Vorflügel (301, 401, 501, 601, 701, 801) so an dem Hauptflügel (302, 402, 502, 602, 702, 802) anbringbar ist, dass sich ein Abstand zwischen der Druckseite des Vorflügels (301, 401, 501, 601, 701, 801) und der Saugseite des Hauptflügels (302, 402, 502, 602, 702, 802) einstellt, wobei insbesondere
der Abstand zwischen Vorflügel (301) und Hauptflügel (302) in Rotorblattlängsrichtung abhängig von der Ausgestaltung des Vorflügels (301), insbesondere wellenartig, stufenartig oder zackenartig, variiert.

10. Rotorblatt (108) nach einem der vorhergehenden Ansprüche, wobei
die Hinterkante des Vorflügels einen Hinterkantenwinkel aufweist, der sich zwischen der Richtung der Profiltiefe des Vorflügels und einer Richtung, in die sich die Hinterkante abweichend von der Richtung der Profiltiefe des Vorflügels erstreckt, einstellt, und
der Hinterkantenwinkel in Rotorblattlängsrichtung, insbesondere wellenartig oder stufenartig, variiert.

11. Rotorblatt (108) nach einem der vorhergehenden Ansprüche, wobei
der Vorflügel (601, 701, 801) in Rotorblattlängsrichtung segmentiert und aus einer Vielzahl von Vortexgeneratoren (603, 703, 803) ausgeführt ist,
wobei die Vortexgeneratoren (603, 703, 803) die aerodynamisch wirksame Fläche aufweisen.

12. Verfahren zum Nachrüsten eines Rotorblattes (108) für eine Windenergieanlage (100), umfassend:
Anbringen eines Vorflügels (301, 401, 501, 601, 701, 801) umfassend mindestens eine aerodynamisch wirksame Fläche zur Strömungsbeeinflussung umfassend eine Saugseite und eine Druckseite an einem Hauptflügel (302, 402, 502, 602, 702, 802) des Rotorblattes (108), wobei
durch den Vorflügel (301, 401, 501, 601, 701, 801) eine inhomogene Auftriebsverteilung durch Erzeugung von Verwirbelungen in dem Bereich des Rotorblattes (108) erzeugt wird, auf den der Vorflügel (301, 401, 501, 601, 701, 801) aerodynamische Auswirkungen hat.

13. Verfahren zum Bereitstellen eines Rotorblatts (108) nach einem der Ansprüche 1 bis 11 umfassend:
Auslegen des Rotorblatts (108) als Rotorblatt mit Hauptflügel (302, 402, 502, 602, 702, 802) und Vorflügel (301, 401, 501, 601, 701, 801),
Bereitstellen des Vorflügels (301, 401, 501, 601, 701, 801) und des Hauptflügels (302, 402, 502, 602, 702, 802),
Anbringen des Vorflügels (301, 401, 501, 601, 701, 801) an den Hauptflügel (302, 402, 502, 602, 702, 802) des Rotorblatts.

14. Windenergieanlage (100) mit einem oder mehreren Rotorblättern (108) nach einem der Ansprüche 1 bis 11.

15. Verfahren zum Verwenden eines Vorflügels (301, 401, 501, 601, 701, 801) zur Erzeugung von Verwirbelungen an einem Rotorblatt (108) für Windenergieanlagen (100).
